(19) Europäisches Patentamt
European Patent Office
Office européen des brevets

(11) EP 2 353 736 A1

(12) # EUROPEAN PATENT APPLICATION

(43) Date of publication:
**10.08.2011 Bulletin 2011/32**

(21) Application number: **10152185.4**

(22) Date of filing: **29.01.2010**

(51) Int Cl.:
***B05D 1/30*** (2006.01) ***B05D 7/00*** (2006.01)
***C09J 7/02*** (2006.01) *B05D 1/42* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **3M Innovative Properties Company**
**Saint Paul, MN 55133-3427 (US)**

(72) Inventors:
- **Kuehneweg, Bernd**
  **40468 Duesseldorf (DE)**
- **Forster, Jan Daniel**
  **52066 Aachen (DE)**
- **Traser, Steffen**
  **64291 Darmstadt (DE)**
- **Hitschmann, Guido**
  **41470 Neuss (DE)**

(74) Representative: **Wilhelm, Stefan**
**3M Deutschland GmbH**
**Office of Intellectual**
**Property Counsel**
**Carl-Schurz-Strasse 1**
**41453 Neuss (DE)**

(54) **Continuous process for forming a multilayer film and multilayer film prepared by such method**

(57) The present invention relates to a continuous process of forming a multilayer film comprising at least two superimposed polymer layers comprising the steps of:
(i) providing a substrate;
(ii) providing two or more coating knives which are offset, independently from each other, from said substrate to form a gap normal to the surface of the substrate;
(iii) moving the substrate relative to the coating knives in a downstream direction,
(iv) providing curable liquid precursors of the polymers to the upstream side of the coating knives thereby coating the two or more precursors through the respective gaps as superimposed layers onto the substrate;
(v) optionally providing one or more solid films and applying these along the upstream side of the coating knives, and
(vi) curing the precursor of the multilayer film thus obtained; wherein a lower layer of a curable liquid precursor is covered by an adjacent upper layer of a curable liquid precursor or a film, respectively, essentially without exposing said lower layer of a curable liquid precursor.

EP 2 353 736 A1

## Description

Field of the invention

The present invention relates to a continuous process of forming a multilayer film comprising at least two superimposed polymer layers. The present invention furthermore relates to a multilayer film obtainable by the process of the present invention which has advantageous optical properties and, in particular, a high transmission wherein the top layer of the multilayer film comprises a polyurethane polymer and the bottom layer comprises an (meth)acrylate based pressure-sensitive adhesive.

Background of the invention

The properties of multilayer films can be varied broadly by varying, for example, the composition of the layers, the sequence of the layers in the multilayer film or the respective thickness of the layers. Multilayer films can therefore be tailor-made for a broad variety of applications in different technical fields.

Multilayer films can be obtained, for example, by lamination of the corresponding single-layered films using conventional lamination equipment. The resulting multilayer films tend to delaminate, however, at the interfaces between the laminated layers when subjected to peel and/or shear forces, especially at elevated temperatures.

US 4,818,610 (Zimmerman et al.) discloses a pressure-sensitive adhesive tape comprising a plurality of superimposed layers wherein at least one outer layer is a pressure-sensitive adhesive layer. The adhesive tapes of US '610 are prepared by sequentially coating liquid compositions each comprising at least one photopolymerizable monomer, onto a substrate. A liner can be attached to the top layer and the plurality of superimposed layers is cured by subjecting it to irradiation in order to provide the adhesive tape. The method of making the adhesive tape is illustrated in the Fig. of US '610 which shows that the coating compositions form "rolling beads or banks" in front of the coating knives or the coating nip formed by a pair of rollers, respectively. The sequence of superimposed layers obtained by the method of US '610 may be distorted by physical mixing occurring between the layers.

Sequential coating methods are furthermore disclosed in JP 2001/187,362-A (Takashi et al.) and in JP 2003/001,648-A (Takashi et al.).

US 4,894,259 (Kuller) discloses a process of making a unified pressure-sensitive adhesive tape where a plurality of superimposed layers is concurrently coated onto a low-adhesion carrier by means of a co-extrusion die having multiple manifolds. The superimposed layers are subsequently subjected to irradiation in order to provide the adhesive tape. Fig. 1 of US '259 illustrates a so-called open-faced photopolymerization process where the topmost exposed layer is not covered with a UV-transparent release liner during the irradiation step so that the irradiation step needs to be conducted in an inert atmosphere. It is also disclosed in US '259 that the photopolymerizable coating is covered with a plastic film which is transparent to UV radiation so that the superimposed layers can be irradiated through such film in air.

The die coating method of US '259 is more complicated and expensive in comparison to the knife coating method of US 4,818,610. The coating compositions need to be pumped through the die. This introduces kinetic energy into the coated layers which may create a non-laminar flow pattern resulting in physical mixing between the layers or thickness variations. The geometry of the manifolds of the die needs to be adjusted to the flow behaviour of the coating compositions so that a specific die may not be usable in a flexible way for various coating processes. The UV-transparent plastic film is attached in US '259 to the top layer subsequent to the die-coating step which may result, for example, in the inclusion of air bubbles between the plastic film and the top layer. Die-coating of multilayer films is also disclosed, for example, in EP 0,808,220 (Leonard), US 5,962,075 (Sartor et al.) and US 5,728,430 (Sartor et al.).

WO 01/89,673-A (Hools) discloses a process of forming multilayered porous membranes wherein two or more solutions of a polymer are co-casted onto a support. The superimposed layers are then immersed into a coagulation bath to effect phase separation followed by drying to form a porous membrane. Coagulation occurs from the liquid film surface that first contacts the coagulation bath with subsequent diffusion of the coagulant through the layers of the multilayered liquid sheet. The diffusion and coagulation process results in mixing at the interfaces between the superimposed layers.

It was an object of the present invention to provide a cost-effective, stable continuous process of forming a multilayer film comprising at least two superimposed polymer layers which does not exhibit the shortcomings of the state-of-the-art processes or exhibits them to a lower extent only, respectively. It was another object of the present invention to provide a method of forming a multilayer film which is versatile and flexible and allows for the easy manufacture of complex structures comprising at least two polymer layers. It was another object of the present invention to provide a multilayer film optionally including a further layer which was initially included as solid film into the curable precursor of the multilayer film. It was another object of the present invention to provide highly transparent, scratch-resistant multilayer films as evaluated, for example, by the extent of transmission of visible light through the multilayer film.

Other objects of the present invention will be apparent to the person skilled in the art from the detailed specification of the invention provided below.

Short description of the invention

The present invention relates to a continuous process of forming a multilayer film comprising at least two superimposed polymer layers comprising the steps of:

(i) providing a substrate;
(ii) providing two or more coating knives which are offset, independently from each other, from said substrate to form a gap normal to the surface of the substrate;
(iii) moving the substrate relative to the coating knives in downstream direction,
(iv) providing curable liquid precursors of the polymers to the upstream side of the coating knives thereby coating the two or more precursors through the respective gaps as superimposed layers onto the substrate;
(v) optionally providing one or more solid films and applying these along the upstream side of the coating knives, and
(vi) curing the precursor of the multilayer film thus obtained;

wherein a lower layer of a curable liquid precursor is covered by an adjacent upper layer of a curable liquid precursor or a solid film, respectively, essentially without exposing said lower layer of a curable liquid precursor.

The present invention furthermore relates to a multilayer film comprising at least two superimposed polymer layers wherein the top layer comprises a polyurethane polymer obtainable from the polymerization of a liquid precursor comprising at least one ethylenically unsaturated urethane compound and wherein the bottom layer comprises a (meth) acrylate based pressure-sensitive adhesive, the multilayer film having a maximum wave-front aberration of a wavefront resulting from a planar wavefront of a wavelength of $\lambda$ = 635 nm impinging normally on the top layer and transmitted through the multilayer film measured as the peak-to-valley value of the transmitted wavefront, of less than 6 $\lambda$ (= 3,810 nm).

Brief description of the figures

*Fig. 1* is a schematic representation of a coating apparatus useful in the present invention.

*Figs.* 2a and 2b are schematic cross-sectional views of a coating knife which can be used in the present invention.

*Fig. 3* is a schematic representation of the method of measuring the wave-front aberration of a wavefront resulting from a planar wavefront normally impinging on the top surface of a multilayer film and transmitted through a multilayer film.

*Fig. 4* is a cross-sectional microphotograph of the multilayer film prepared according to Example 2 below.

*Fig. 5* is a cross-sectional microphotograph of the multilayer film prepared according to Example 5 below.

*Fig. 6* is a cross-sectional microphotograph of the multilayer film prepared according to Example 11 below.

*Figs. 7*a *and 7b* are cross-sectional microphotographs of the multilayer film prepared according to Example 12 below taken at different magnifications.

*Fig. 8* is a cross-sectional microphotograph of the multilayer film prepared according to Example 13.

*Figs. 9a* - *9e* represent Siemens Star test images for a glass plate reference, the multilayer film of Example 22 and the films of Comparative Examples 1 a - 1 c.

Detailed description of the invention

In the continuous coating process of the present invention two or more curable liquid precursors of polymeric materials are coated onto a substrate and cured to provide a multilayer film comprising at least two superimposed polymer layers.

The term superimposed as used above and below means that two or more of the layers of the liquid precursors of the polymers or of the polymer layers of the multilayer film, respectively, are arranged on top of each other. Superimposed liquid precursor layers may be arranged directly next to each other so that the upper surface of the lower layer is abutting the lower surface of the upper layer. In another arrangement superimposed liquid precursor layers are not abutting each other but are separated from each other by one or more liquid precursor layers and/or one or more solid films or webs.

The term adjacent as used above and below refers to two superimposed layers within the precursor multilayer film or the cured multilayer film which are arranged directly next to each other, i. e. which are abutting each other.

The terms top and bottom layers, respectively, are used above and below to denote the position of a liquid precursor layer relative to the surface of the substrate bearing the precursor layer. The precursor layer arranged next to the substrate surface is referred to as bottom layer whereas the precursor layer arranged most distantly from the substrate surface in a direction normal to the substrate surface, is referred to as top layer.

The terms superimoposed, adjacent, top and bottom likewise apply to the cured polymer layers and the cured multilayer film, respectively.

The term precursor as used above and below denotes the material from which the polymers of the corresponding polymer layers of the multilayer film can be obtained by curing. The term precursor is also used to denote the stack of layers comprising at least two layers of liquid precursors from which the multilayer film of the present invention can be obtained by curing. Curing can be effected by curing with actinic radiation such as UV, $\gamma$ (gamma) or e-beam radiation or by thermal curing.

The process of the present invention employs a substrate onto which the two or more layers of the liquid precursors are coated, and two or more coating knives which are offset independently from each other from the surface of the substrate receiving the precursor of the multilayer film, to form gaps normal to the surface of the substrate.

The direction into which the substrate is moving is referred to above and below as downstream direction. The relative terms upstream and downstream describe the position along the extension of the substrate. A second coating knife which is arranged in a downstream position relative to a first coating knife, is also referred to above and below in an abbreviatory manner as downstream coating knife relative to the first (upstream) coating knife.

The coating knives useful in the present invention each have an upstream side, a downstream side and a bottom portion facing the surface of the substrate receiving the precursor of the multilayer film. The gap is measured as the minimum distance between the bottom portion of the coating knife and the exposed surface of the substrate. The gap can be essentially uniform in the transverse direction (i. e. in the direction normal to the downstream direction) or it may vary continuously or discontinuously in the transverse direction, respectively.

The cross-sectional profile of the bottom portion of the coating knife in the longitudinal direction is designed so that the precursor layer is formed and excess precursor is doctored off. Such cross-sectional profile can vary widely, and it can be, for example, essentially planar, curved, concave or convex. The profile can be sharp or square, or it can have a small radius of curvature providing a so-called bull-nose. A hook-type profile may be used to avoid a hang-up of the trailing edge of the precursor layer at the knife edge. A coating knife having a bull-nose type or radius type profile is shown, for example, in Figs. 2a and 2b.

The coating knives can be arranged essentially normal to the surface of the web, or they can be tilted whereby the angle between the web and the downstream surface of the coating knife preferably is between 50° and 130° and more preferably between 80° and 100°.

The bottom portion of the coating knife is preferably selected to extend at least across the desired width of the coating in a direction essentially normal to the downstream direction. The coating knife is preferably arranged opposite to a roll so that the substrate is passing between the transversely extending edge of the coating knife and the roller. Thus the substrate is supported by the roller so that the substrate is not sagging in a direction normal to the downstream direction. In this arrangement the gap between the coating knife and the surface of the substrate can be adjusted precisely. If the coating knife is used in an unsupported arrangement the substrate is held in place by its own tension but may be sagging to some extent in a direction normal to the downstream direction. Sagging of the substrate can be minimized by arranging the coating knife over a short span of the substrate between adjacent rollers. If a continuous substrate is used sagging can be further minimized by guiding it over an endless conveyor belt. Another option to avoid/ minimize sagging is guiding the substrate over a rigid surface.

The coating knives useful in the present invention are solid, and they can be rigid or flexible. They are preferably made from metals, polymeric materials, glass or the like. Flexible coating knives are relatively thin and preferably between 0.1 and 0.75 mm thick in the downstream direction and they are preferably made of flexible steels such as stainless steel or spring steel. Rigid coating knives can be manufactured of metallic or polymeric materials, and they are usually at least 1 mm, preferably at least 3 mm thick. A coating knife can also be provided by a continuously supplied polymer film which is tensioned and appropriately deflected by rollers to provide a transversely extending coating edge facing the substrate. If desirable, the polymer film can simultaneously be used as a release liner or as a solid film incorporated into the precursor of the multilayer film.

It is essential in the present invention that a lower layer of a curable liquid precursor is coated with an adjacent upper layer of a curable liquid precursor or a solid film, respectively, essentially from its onset. Thus the lower curable

liquid precursor layer is directly covered by the adjacent upper layer of a curable liquid precursor layer or by the solid film, respectively, essentially without exposing said lower curable liquid precursor layer. A solid film is preferably applied along the upstream side of the coating knife which also provides the lower layer of a curable liquid precursor. The film is thus attached to the upper surface of the lower layer during the formation of said layer and the lower layer is not exposed. Directly depositing an upper layer of a curable liquid precursor onto the upper surface of said lower layer without exposing such upper surface of the lower layer can be accomplished by appropriately arranging the two coating knives forming the two layers. In a preferred embodiment the liquid precursors are applied via two coating chambers abutting each other in the downstream direction whereby the back walls of the coating chambers comprise or form, respectively, the coating knives. The lower layer when formed by the corresponding coating knife is thus directly covered with the curable liquid precursor of the upper layer contained in the corresponding coating chamber. Generally the coating knife forming the upper layer needs to be arranged so that the lower layer, upon its formation at the corresponding coating knife, is essentially directly covered with the curable liquid precursor forming the upper layer.

Although the present inventors do not wish to be bound by such theory, it is speculated that the above deposition of a solid film or of the liquid precursor forming the adjacent upper layer, respectively, onto the lower liquid precursor layer essentially simultaneously with the formation of the lower layer by means of coating knives results in multilayer films characterized by superior properties. The multilayer films of the present invention exhibit, for example, both well-defined, relatively sharp interfaces between adjacent layers or films respectively, and a strong anchorage of adjacent layers or films so that the films of the present invention typically exhibit a higher T-peel strength than corresponding films obtained by lamination of the corresponding layers. The multilayer films of the present invention furthermore exhibit superior optical properties like a high optical transmission, a low colour shift and a low maximum aberration of a wavefront resulting from a normally impinging planar wavefront after its transmission through the multilayer film.

In a preferred embodiment of the present invention, the precursor of the multilayer film is obtained by using a coating apparatus comprising one or more coating chambers. The coating chambers each have an opening towards the substrate moving beneath the coating chambers so that the liquid precursors are applied as layers superimposed onto each other.

The coating chambers each have a front wall and a back wall preferably extending essentially transversely with respect to the downstream direction. In case two or more coating chambers are present the back wall of an upstream coating chamber preferably is in an essentially abutting arrangement with the front wall of the adjacent downstream coating chamber. This means that the distance between the back wall of an upstream coating chamber and the front chamber of the adjacent coating chamber preferably is less than 2.5 mm, more preferably less than 1 mm and especially preferably there is no distance at all between these walls. In a particularly preferred embodiment, the back wall of an upstream coating chamber and the front wall of the adjacent down stream coating chamber are integrated into one wall which is referred to above and below as an intermediate wall.

The back walls each comprise a coating knife facing the substrate. The coating knives are arranged above the exposed surface of the substrate onto which the liquid precursors are attached thereby providing for clearance between the bottom portion of the coating knife facing the substrate and the exposed surface of the substrate or the exposed layer of the liquid precursor or precursors attached previously, respectively. The distance between the bottom portion of the coating knife and the surface of the substrate as measured in a direction normal to the surface of the substrate is referred to above and below as gap. The liquid precursors are supplied from the bulk of the coating chamber to the upstream side of the respective coating knife. The gap between the coating knife and the surface of the substrate is adjusted to regulate the thickness of the respective coating in conjunction with other parameters including, for example, the speed of the substrate in the downstream direction, the thickness normal to the substrate of the liquid precursor layers or solid films, respectively, already applied, the viscosity of the liquid precursor to be applied through the respective gap, the viscosity of the liquid precursor(s) already applied, the kind, form and profile of the coating knife, the angle with which the coating knife is oriented relative to the normal of the substrate, the position of the knife along the extension of the coating apparatus in the downstream direction and the kind of the substrate.

The coating knife can be a separate element attached to the back wall or it can form the back wall, respectively.

The knife profile can be optimized for a specific liquid precursor supplied through a coating chamber by using a rotatable coating knife device equipped with several coating knives having a different knife profile. The person skilled in the art can thus quickly change the coating knives used as back wall, front wall or intermediate walls, respectively, in the different coating chambers and evaluate the optimum sequence of coating knife profiles in a coating apparatus for manufacturing a specific multilayer film.

If the coating apparatus useful in the present invention comprises only one coating chamber both the front wall and the back wall of the coating chambers comprise or form, respectively, coating knives. The liquid precursor can be supplied to the upstream edge of the front wall, for example, by means of a so-called rolling bead, or it can be supplied by any kind of hopper.

If the coating apparatus of the present invention comprises two or more coating chambers the front wall may or may not form a coating knife. If the front wall does not form a coating knife it may be arranged so that there is essentially

no gap between the transverse extension of the bottom portion of the front wall facing the substrate and the exposed surface of the substrate so that an upstream leakage of the liquid precursor is reduced and/or minimized. If the front wall is a coating knife the profile of its bottom portion may be formed so that an upstream leakage of the liquid precursor contained in the first upstream coating chamber is suppressed. This can be achieved, for example, by using an essentially radius type profile of the transversely extending edge of the front wall facing the substrate.

The coating cambers each have a back wall, a front wall and two or more side walls essentially extending in the downstream direction, whereby the back wall of an upstream chamber and the front wall of an adjacent downstream chamber may be integrated into one intermediate wall. The cross-section of the coating chambers in the downstream direction can vary broadly and can be, for example, square, rectangular, polygonal or regularly or irregularly curved. The back wall, front wall and/or the side walls may be present as separate elements but it is also possible, for example, that a coating chamber is formed as one piece or that the front walls and the side walls, for example, are formed as one piece separate from the back wall coating knife. It is generally preferred that the back wall is a separate element or piece so that the coating knives representing the back wall can be easily replaced, for example, by means of a revolvable coating knife device. In case the coating apparatus comprises two or more coating chambers their respective cross-sections are preferably selected that adjacent coating chambers can be arranged in an essentially abutting configuration in the downstream direction. The front walls and the back walls of the coating chambers preferably are essentially straight in the direction transverse to the downstream direction.

The extension of a coating chamber in the downstream direction, i. e. the distance between the front wall and the back wall of a coating chamber is preferably between 2.5 mm and 500 mm and more preferably between 5 and 100 mm. Although the present inventors do not wish to be bound by such theory it is speculated that if the distance between the front wall and the back wall is too small the flow of the liquid precursor towards the gap tends to become instable which results in undesirable coating defects such as, for example, streaks or "brushmarks". If the distance between the front wall and the back wall of the coating chamber is too large the continuous flow of the liquid precursor towards the gap may rupture so that the continuous coating of the moving substrate may cease and/or mixing might occur. The flow pattern in a coating chamber or trough is discussed in more detail in US 5,612,092, col. 4, In. 51 to col. 5, In. 56. This passage is incorporated by reference into the present specification.

The volume of the coating chambers is defined by their respective cross-section parallel to the surface of the substrate and their respective height normal to the surface of the substrate. The height of the coating chambers preferably is between 10 and 1,000 mm and more preferably between 25 and 250 mm. The volume of the coating chambers is preferably selected as a function of the coating width transverse to the downstream direction.

The coating chambers may be fitted with heating or cooling means so that the viscosity of the liquid precursors can be controlled and adjusted if necessary.

The liquid precursors are preferably applied under ambient pressure so that the volume flow of the precursors mainly results from the shear forces acting on the precursors as a result of the movement of the substrates and, optionally, of the solid films or webs introduced into the precursor multilayer film. The volume flow of the liquid precursors is supported by the hydrostatic pressure of the precursor comprised in the respective coating chamber. It is preferred in the method of the present invention that the force resulting from the hydrostatic pressure is low in comparision to the drag force or forces exerted by the moving substrate and, optionally, moving solid films. The height of the liquid precursor in a coating chamber is preferably controlled so that such height corresponds to at least the width of the coating chamber in the downstream direction throughout all of the coating process. If the height of the liquid precursor in a coating chamber is less than the width of the coating chamber in downstream direction partial mixing of the precursor applied through such coating chamber with an adjacent lower precursor layer may occur. The height of the liquid precursor in the respective coating chamber is preferably kept essentially constant.

It is also possible that the coating chambers are pressurized with air or an inert gas such as nitrogen or argon. The coating apparatus may be equipped so that the coating chambers may be pressurized separately and individually which may be desirable, for example, to counterbalance differences in viscosity between the different liquid precursors or differences in height of the liquid precursor column in the coating chambers. The total over-pressure exerted onto the respective liquid precursor preferably is less than 0.5 bar and more preferably not more than 0.25 bar. In an especially preferred embodiment no gas over-pressure is applied. The substrate is moved relatively to the coating knives in the downstream direction to receive a sequence of two or more layers of the liquid precursors which are superimposed onto each other in a direction normal to the downstream direction.

The substrate can be a temporary support from which the multilayer film is separated and removed subsequent to curing. When used as a temporary support the substrate preferably has a release coated surface adapted to allow for a clean removal of the cured multilayer film from the substrate. It may be desirable that the substrate when providing a temporary support remains attached to the multilayer film when winding it up, for example, for storage. This is, for example, the case if the bottom layer of the multilayer film is an adhesive layer such as a pressure-sensitive adhesive layer. The release-coated substrate protects the surface of the pressure-sensitive adhesive layer, for example, from contamination and allows the multilayer film to be wound up into a roll. The temporary substrate will then only be removed

from the multilayer film by the final user when attaching the multilayer film to a surface, for example. In other embodiments where the surface of the first layer of the multilayer film facing the substrate does not need to be protected the substrate providing a temporary support may be removed and wound up subsequent to curing the precursor layers and prior to storing the multilayer film. In another embodiment, the substrate providing a temporary support may be provided by an endless belt preferably having an exposed release surface. The multilayer film obtained after curing the stack of layers of liquid precursors separates from the endless belt and can be wound up, for example.

Alternatively, the substrate can be integrated as a layer into the resulting multilayer film. In such case, the substrate is continuously fed as a film or web and collected as a part of the multilayer film subsequent to the curing of the liquid precursor layers. The surface of the substrate may preferably be subjected, for example, to a corona treatment to enhance the anchoring of the cured bottom polymeric layer to the substrate. Anchoring of the bottom polymeric layer to the substrate may also be improved by applying a so-called tie layer onto the surface of the substrate prior to coating the bottom liquid precursor layer to the substrate. Tie layers which are suitable in the present invention include, for example, 3M Primer 4297, a polyamide based primer commercially available from 3M Co. or 3M Primer 4298, a primer comprising an acrylic polymer and a chlorinated polyolefin as active sustances which is commercially available from 3M Co.

Substrates which are suitable both as temporary substrates or as substrates for incorporation into the multilayer film, respectively, can be selected from a group comprising polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres. Depending on the nature of the liquid precursor applied as a bottom layer onto the substrate and on whether the substrate is used as a temporary support or as an integral layer of the multilayer film, the person skilled in the art can decide without any inventive input whether a treatment of the substrate surface is required or desirable. It was found by the present inventors that the method of the present invention is relatively insensitive to the roughness of the exposed surface of the substrate. The surface roughness can be characterized by the arithmetic average surface roughness $R_a$ which can be measured, for example, by laser profilometry. Polymeric films suitable for use in the present invention may have $R_a$ values of, for example, 1 - 20 μm or more preferably of 1 - 10 μm whereas non-woven webs may have $R_a$ values of between 10 and 150 μm and more preferably between 15 and 100 μm. The multilayer films obtainable by the method of the present invention exhibit, essentially independent of the surface roughness $R_a$ of the substrate, a bottom polymer layer with a homogenous thickness along the extension of the web in the downstream direction. The average deviation of the thickness of the bottom polymer layer in a direction normal to the downstream direction preferably is over an arbitrarily selected distance of 10 mm less than 10 %, more preferably less than 5 % and especially preferably less than 2.5 %.

If the substrate is used as a temporary support its optionally release treated facing the coating knives preferably is essentially impermeable with respect to the liquid precursor applied to the substrate.

If the substrate forms an integral part of the multilayer film subsequent to curing the precursor of the multilayer film it is also desirable that the optionally treated surface of the substrate is essentially impermeable with respect to the bottom precursor layer or that the bottom liquid precursor does at least not migrate to the opposite surface of the substrate prior to curing, respectively. In case of substrates having a certain porosity such as, for example, non-woven substrates or paper it may be desirable that the liquid precursor penetrates into the surface area into the bulk of the substrate, respectively, so that the interfacial anchorage between the first polymer layer and the surface of the substrate is improved. The penetration or migration behaviour of the liquid precursor relative to a given substrate can be influenced, for example, by the viscosity of the liquid precursor and/or the porosity of the substrates.

The thicknesses of the liquid precursor layers normal to the substrate are mainly influenced by the gap between the bottom portion of the coating knife and the surface of the substrate, the respective viscosities of the liquid precursors and the downstream speed of the substrate.

The thickness of the liquid precursor layers preferably is independently of each other between 25 μm and 3,000 μm, more preferably between 75 μm and 2, 000 μm and especially preferably between 75 μm and 1,500 μm. The desirable thickness of a coating layer depends, for example, on the nature of the liquid precursor and the resulting cured polymer layer.

The gap width required to provide a desired value of the thickness of the precursor layer depends on various factors such as the profile of the coating knife, the angle of the coating knife normal to the substrate, the downstream speed of the substrate, the number of layers of liquid precursors to be coated, the absolute values of the viscosities of the liquid precursors and the ratio of the absolute values of the viscosity of a specific precursor with respect to the absolute viscosity values of the liquid precursor present in adjacent layers. Generally, the gap width needs to be larger than the desired thickness of the respective layer of the liquid precursor regulated by such gap. It is disclosed, for example, in Kirk-Othmer, Encyclopedia of Chemical Technology, 4th ed., ed. by J. Kroschwitz et al., New York, 1993, vol. 6, p. 610, as a rule of thumb that the thickness of the liquid precursor layer obtained by means of a coating knife arranged normal to the substrate and having a transversely extending bottom portion with a square profile arranged in parallel to the substrate is about half the width of the gap for a wide range of substrate speeds.

The gap width is measured in each case as the minimum distance between the bottom portion of the coating knife facing the substrate and the exposed surface of the substrate. The gap is preferably adjusted to a value between 50 μm and 3,000 μm and more preferably between 100 μm and 2,500 μm.

The Brookfield viscosity of the liquid precursors at 25 °C preferably is between 100 and 50,000 mPa·s, more preferably between 500 and 30,000 mPa·s and particularly preferred between 500 and 25,000 mPa·s. If the liquid precursor comprises solid particles such as, for example, pigments or thermally and/or electrically conducting particles, the viscosity of the liquid precursor preferably is between 1,000 and 30,000 mPa·s and more preferably between 3,000 and 25,000 mPa·s.

It was found by the present inventors that liquid precursors having a lower Brookfield viscosity can be coated faster and thinner. If a layer thickness of the liquid precursor of less than 500 μm is required the Brookfield viscosity of the liquid precursor preferably is less than 15.000 mPa·s and more preferably between 500 mPa·s and 12.500 mPa·s.

If the viscosity of the liquid precursor is less than about 100 mPa·s the coated layer tends to get instable and the thickness of the precursor layer may be difficult to control. If the viscosity of the liquid precursor is higher than about 50.000 mPa·s coating of homogeneous films tends to get difficult due to high shear forces induced by the high viscosity. If the liquid precursor comprises curable monomers and/or oligomers the viscosity of the precursor may be increased in a controlled way within the ranges given above by partially polymerizing the precursor to provide a desirable coatability. Alternatively, the viscosity of the liquid precursor may be increased and adjusted by adding thixotropic agents such as fumed silica and/or polymer adds such as block-copolymers (SBRs, EVAs, polyvinylether, polyalphaolefins), silicones or acrylics. The viscosity of the liquid precursor may also be decreased, for example, by increasing the amount of curable monomers and/or oligomers.

It was found that, within a stack of liquid precursor layers, the absolute and/or relative thickness of a first upper layer of a liquid precursor having a first Brookfield viscosity at 25 °C is typically increased with increasing downstream speed of the substrate in comparison to the absolute and/or relative thickness of a second layer of a liquid precursor which is adjacent to the first layer and the precursor of which has a second Brookfield viscosity at 25 °C which is lower than that of said first precursor. The term relative thickness of a specific liquid precursor layer is defined as the ratio of the thickness of this precursor layer over the thickness of the completed stack of liquid precursor layers prior to curing, i. e. the thickness of the precursor multilayer film.

It was furthermore found that the ratio of the Brookfield viscosities of the liquid precursors of an upper liquid precursor layer and a lower, adjacent liquid precursor layer within a stack of precursor layers preferably is between 0.1 and 10 and more preferably between 0.2 and 7.5. It was found that if such ratio is outside of these preferred ranges the thicknesses of such liquid precursor layers may become inhomogenous in the downstream direction.

The downstream speed of the substrate preferably is between 0.05 and 100 m/min, more preferably between 0.5 and 50 m/min and especially preferably between 1.5 and 50 m/min. If the downstream speed of the substrate is less than 0.05 m/min the flow of the liquid precursors towards the gap becomes slow and instable resulting in coating defects. If the downstream speed of the substrate is higher than 100 m/min turbulences might occur at the interfaces between the precursor layers which may, depending on the viscosity and rheology of the precursors, result in uncontrolled mixing and/or coating defects.

It was found by the present inventors that for a specific viscosity of a liquid precursor the quality of the coating may unacceptably deteriorate if the downstream speed of the substrate is selected too high. The deterioration in quality may be reflected in the entrainment of air bubbles or in the occurrence of a streaky and non-uniform coating. The coating speed is preferably adapted so that all liquid precursor layers in a stack of such layers are coated uniformly and with a high quality, i. e. the most speed-sensitive layer determines the overall downstream speed. If the downstream speed of the substrate is selected too low, a reduction of the layer thickness may not be achievable by the reduction of the corresponding gap width only but may also require an increase of the downstream speed. It was furthermore found by the present inventors that the downstream speed of the substrate is preferably selected between the maximum and minimum values specified above. In such downstream speed interval the thickness of the liquid precursor layers is relatively insensitive to variations of the downstream speed so that the thickness of the liquid precursor layer can be majorly regulated by the gap width.

The liquid precursors suitable in the present invention comprise a broad range of precursors which can be cured by exposure to actinic radiation and, in particular, to UV-radiation, gamma-radiation and E-beam or by exposure to heat. Precursors the curing of which does not include the release of low molecular weight condensate molecules such as water or alcohol molecules or includes such release only to a low amount, are usually preferred because the condensate molecules of non-exposed liquid precursor layers can typically not be fully discharged from the multilayer film.

The liquid precursors suitable in the present invention preferably comprise at least one compound having a radiation curable ethylene group. In a preferred embodiment, the radiation curable ethylene group is a (meth)acrylate group. In another preferred embodiment, the radiation curable ethylene group is a mono-and/or poly(meth)acrylate functional oligomer compound comprising at least one urethane bond. The term "oligomer" as used above and below refers to relatively low molecular weight polymeric compounds. Poly(meth)acrylate functional oligomer compounds comprising at least one urethane bond preferably have a weight average molecular weight $M_w$ between 500 and 35,000 and more preferably of between 1,000 and 30,000. Such oligomeric compounds are typically liquid at room temperature and ambient pressure whereby the Brookfield viscosity is preferably less than 500 Pa·s and more preferably less than 200 Pa·s at 25 °C.

The liquid precursor of the present invention preferably is essentially solvent-free, i. e. it does essentially not comprise any non-reactive solvents such as, for example, methanol, acetone, dimethylsulfoxide, or toluene. It is, however, possible though not preferred that the precursor comprises small amounts of one or more of such non-reactive solvents of preferably less than 2 pph and more preferably of less than 1 pph with respect to the mass of the precursor in order to lower the viscosity of the liquid precursor.

A preferred liquid precursor suitable in the present invention is curable to a pressure-sensitive adhesive. Especially preferred is a (meth)acrylate-based pressure-sensitive adhesive.

The liquid precursor of the (meth)acrylate based pressure sensitive adhesive comprises one or more alkyl (meth)acrylates, i. e. one or more (meth)acrylic acid alkyl ester monomers. Useful alkyl (meth)acrylates include linear or branched monofunctional unsaturated (meth)acrylates of non-tertiary alkyl alcohols, the alkyl groups of which have from 4 to 14 and, in particular, from 4 to 12 carbon atoms. Examples of these lower alkyl acrylates which are useful in the liquid precursor of (meth)acrylate based adhesives include n-butyl, n-pentyl, n-hexyl, cyclohexyl, isoheptyl, n-nonyl, n-decyl, isohexyl, isobornyl, 2-ethyloctyl, isooctyl, 2-ethylhexyl, tetrahydrofurfuryl, ethoxyethoxyethyl, phenoxyethyl, cyclic trimethlypropane formal, 3,3,5-trimethylcyclohexyl, t-butylcyclohexyl, t-butyl acrylates and methacrylates. Preferred alkyl acrylates include isooctyl acrylate, 2-ethylhexyl acrylate, n-butylacrylate, tetrahydrofurfuryl acrylate, isobornyl acrylate, ethoxyethoxyethyl acrylate, phenoxyethyl acrylate, 3,3,5-trimethylcyclohexyl acrylate,and cyclohexyl acrylate. Particularly preferred alkyl acrylates include isooctyl acrylate and tetrahydrofurfuryl acrylate. Particularly preferred alkyl methacrylates include butyl methacrylate, cyclohexyl methacrylate, and isobornyl methacrylate.

The liquid precursor of the (meth)acrylate based pressure sensitive adhesive preferably comprises up to 5 and, in particular, 1 - 4 (meth)alkyl acrylates. The amount of the alkyl acrylate compouds with respect the total mass of meth) acrylate functionalized monomers, oligomers and/or polymers with the exception of crosslinkers preferably is at least 75 wt. %, more preferably at least 85 wt. % and especially preferably between 85 and 99 wt. %.

The liquid precursor of the (meth)acrylate based pressure sensitive adhesive may furthermore comprise one or more moderately polar and/or strongly polar monomers. Polarity (i. e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid, itaconic acid, hydroxyalkyl acrylates, acrylamides and substituted acrylamides while, for example N-vinyl pyrrolidone, N-vinyl caprolactam, acrylonitrile, vinylchloride, diallyl phthalate and N,N-dialkylamino (meth)acrylates are typical examples of moderately polar monomers. Further examples for polar monomers include cyano acrylate, fumaric acid, crotonic acid, citronic acid, maleic acid, β-carboxyethyl acrylate or sulfoethyl methacrylate. The alkyl (meth)acrylate monomers enumerated above are typical examples of relatively poorly polar monomers. The amount of more moderately polar and/or strongly polar monomers preferably is not too high and, in particular, does not exceed 25 wt. % with respect to the total mass of meth) acrylate functionalized monomers, oligomers and/or polymers with the exception of crosslinkers.

The liquid precursor of the (meth)acrylate based pressure sensitive adhesive may furthermore comprise one or more monomers like mono- or multifunctional silicone (meth)acrylates. Exemplary silicone acrylates are Tego Rad products from the Evonik company, Germany, methacryyloxyurea siloxanes or acrylamidoamido siloxanes.

Ethylenically unsaturated partly- or perfluorinated mono- or oligomers may also be part of the formulation of the liquid precursor. Examples are the perfluoropolyether acrylate Sartomer CN 4001, available from Sartomer Company Inc, or the F-oligomer II, synthesized as detailed I the "List of materials used" below.

The liquid precursor of the (meth)acrylate based pressure sensitive preferably comprises one or more crosslinkers in an amount effective to optimize the cohesive or inner strength of the cured pressure sensitive adhesive. Useful crosslinkers for use in the liquid precursor of the (meth)acrylate based pressure sensitive include, for example, benzaldehyde, acetaldehyde, anthraquinone, various benzophenone-type and vinyl-halomethyl-s-triazine type compounds such as, for example, 2,4-bis(trichloromethyl)-6-(4-methoxyphenyl)-s-triazine. Preferred are polyacrylic-functional monomers such as, for example, trimethylolpropane triacrylate, pentaerythritol tetraacrylate, 1,2-ethylene glycol diacrylate, tripropyleneglycol diacrylate, 1,6-hexanediol diacrylate or 1,12-dodecanediol diacrylate. The compounds listed above, which can be substituted or unsubstituted, are intended to be illustrative and by no means limitative. Other useful crosslinkers which could be used are thermal crosslinkers. Exemplary thermal crosslinkers include: melamine, multifunctional aziridiens, multifunctional isocyanates, d i-carbonic acids/carbonic acid anhydides, oxazoles, metalchelates, amines, carbodiimides, oxazolidones, and epoxy compounds. Hydroxyfunctional acrylates such as 4-hydroxybutyl(meth) acrylate or hydroxyethyl (meth)acrylate can be crosslinked, for example, with isocyanate or amine compounds.

Hydrolyzable, free-radically copolymerizable crosslinkers, such as monoethylenically unsaturated mono, di-

and trialkoxy silane compounds including, but not limited to, methacryloxypropyltrimethoxysilane, vinyldimethylethoxysilane, vinylmethyldiethoxysilane, vinyltriethoxysilane, vinyltrimethoxysilane, vinyltriphenoxysilane, and the like are also useful crosslinking agents.

Aside from thermal, moisture or photosensitive crosslinking agents, crosslinking may achieve using high energy electromagnetic radiation such as gamma or e-beam radiation.

The crosslinking compounds are preferably present in an amount of 0.01 to 10 pph, in particular, between 0.01 and 5 pph and very specifically between 0.01 and 3 pph.

The liquid precursor of the (meth)acrylate based pressure sensitive preferably comprises one or more photoactivatable polymerization initiators such as, for example, benzoin ethers (e.g., benzoin methyl ether, benzoin isopropyl ether, substituted benzoin ethers such as anisoin methyl ether), acetophenones (e.g., 2,2-diethoxyacetophenone), substituted acetophenones such as 2,2-diethoxyacetophenone, 2,2-dimethoxy-2-phenyl-acetophenone, and 1-phenyl-2-hydroxy-2-methyl-1-propanone, substituted alpha-ketols (e.g., 2-methyl-2-hydroxy-propiophenone), aromatic sulphonyl chloride, and photoactive oximes such as 1-phenyl-1,1-propanedione-2-(O-ethoxycarbonyl) oxime and/or thermally activatable initiators such as, for example, organic peroxides (e.g., benzoyl peroxide and lauryl peroxide) and 2,2'-azobis (isobutyronitrile). The liquid precursor preferably comprises between 1-3 and, in particular, between 1-2 photonitiator compounds; especially preferred are liquid precursors comprising only one photoinitiator compound. The photoinitiator compounds are preferably present in an amount of 0.01 - 2.00 pph, in particular, between 0.05 - 1.00 pph and very specifically between 0.1 - 0.5 pph.

The liquid precursor of the (meth)acrylate based pressure sensitive may comprise other components and adjuvents such as tackifiers, plasticizers, reinforcing agents, dyes, pigments, light stabilizing additives, antioxidants, fibers, electrically and/or thermally conducting particles, fire retardants, surface additives (flow additives), rheology additives, nanoparticles, degassing additives, glass bubbles, polymeric bubbles, beads, hydrophobic or hydrophilic silica, calcium carbonate, blowing agents, reinforcing and toughening agents.

The liquid precursor of the (meth)acrylate based pressure sensitive is preferably prepared by adding part of the photoinitiator compounds to a monomer mixture comprising the alkyl (meth)acrylate monomers and the moderately polar and/or strongly polar monomers and partially polymerizing such mixture to a syrup of a coatable viscosity of, for example, 300 - 35,000 mPa·s (Brookfield, 25 °C). The viscosity of the resulting precursor is further adjusted by adding the other compounds such as crosslinker compounds, the remainder of the photoinitiator compounds, silicone (meth) acrylates and any additives and adjuvants as may be used. The viscosity of the resulting precursor precursor can also be adjusted by adding a small amount of typically less than 5 pph of a polymeric additive such as, for example, reactive, photopolymerizable polyacrylates. The partial polymerization of the monomer mixture is carried out with appropriate UV lamps having at a wavelength between 300 - 400 nm with a maximum at 351 nm at an intensity of preferably between about 0.1 to about 25 $mW/cm^2$. The exposure preferably is between 900-1,500 $mJ/cm^2$. The polymerization may be stopped either by removal of the UV and/or the introduction of, for example, radical scavenging oxygen.

Another preferred liquid precursor suitable in the present invention is UV-curable and comprises at least one ethylenically unsaturated compound comprising at least one urethane bond. Such compounds preferably are monomers or oligomers, and/or at least one of the ethylenically unsaturated groups preferably is a (meth)acrylate group. Such precursor can be polymerized to a polyurethane acrylate polymer, i. e. to a polymer comprising urethane bonds. Especially preferred is a liquid precursor comprising one or more mono- and/or multi(meth)acrylate functional monomer or oligomer compounds comprising at least one urethane bond, one or more monomer compounds comprising one or more ethylenically unsaturated groups but no urethane bond and one or more photoinitiators.

Mono- and multi- (meth)acrylate functional oligomers comprising at least one urethane bond are commercially available, for example, from Rahn AG, Zurich, Switzerland under the GENOMER trade designation. GENOMER 4188 is a mixture consisting of 80 wt. % of a monoacrylate-functional polyester based oligomer comprising at least one urethane bond, and 20 wt. % of 2-ethylhexylacrylate; the oligomer comprised by GENOMER 4188 has a weight average molecular weight $M_w$ of about 8,000 and the average acrylate functionality is 1 $\pm$ 0.1. GENOMER 4316 is an aliphatic trifunctional polyurethane acrylate characterized by a viscosity of 58,000 mPas at 25 °C and a glass transition temperature Tg 4 °C. GENOMER 4312 is an aliphatic trifunctional polyester urethane acrylate characterized by a viscosity of 50,000 - 70,000 mPas at 25 °C.

The mono- -or multi-(meth)acrylate functional oligomer compounds each have at least one, preferably at least 2 and more preferably at least 4 urethane bonds.

Mono- and multi-(meth)acrylate functional oligomers and their preparation are disclosed on p. 4, In. 24 - p. 12, In. 15 of WO2004/000,961 which passage is herewith incorporated by reference.

The amount of the one ore more mono- or multi-(meth)acrylate functional oligomers comprising at least one urethane bond with respect to the total mass of meth)acrylate functionalized monomers, oligomers and/or polymers with the exception of crosslinkers preferably is from 30 - 97.5 wt. % and more preferably from 45 - 95 wt. %.

The liquid precursor of the polyurethane polymer suitable in the present invention furthermore comprises one or more monomer compounds comprising one or more ethylenically unsaturated group but no urethane bond. Examples

of suitable ethylenically unsaturated groups include vinyl, vinylene, allyl and, in particular, (meth)acrylic groups. The amount of such compounds with one or more ethylenically unsaturated group total mass of meth)acrylate functionalized monomers, oligomers and/or polymers with the exception of crosslinkers preferably is from 2.5 - 70 wt. % and more preferably from 5 - 55 wt. % .

Compounds with one or more (meth)acrylic groups can preferably be selected from the poorly polar alkyl (meth) acrylate monomers, the moderately polar and/or strongly polar monomers and the two- or higher acrylic group functional crosslinkers disclosed above in connection with the liquid precursor of the acrylate-based pressure-sensitive adhesive.

The liquid precursor of the polyurethane polymer preferably comprises one or more (meth)acrylate monofunctional compounds having a glass transition temperature of the corresponding homopolymer of less than 10 °C. Preferred examples of such monomers include n-butyl acrylate, isobutyl acrylate, hexyl acrylate, 2-ethylhexyl acrylate, isooctyl acrylate, caprolactone acrylate, isodecyl acrylate, tridecyl acrylate, lauryl methacrylate, methoxy-polyethylenglycol-monomethacrylate, lauryl acrylate, tetrahydrofurfuryl acrylate, ethoxy-ethoxyethyl acrylate and ethoxylated-nonyl acrylate. Especially preferred are 2-ethylhexyl acrylate, isooctyl acrylate and tetrahydrofurfuryl acrylate.

The liquid precursor of the polyurethane polymer preferably comprises one or more (meth)acrylate monofunctional compounds having a glass transition temperature of the corresponding homopolymer of 50 °C or more. Preferred examples of such monomers include acrylic acid, N-vinylpyrrolidone, N-vinyl caprolactam, isobornyl acrylate, acryloylmorpholine, isobornyl methacrylate, phenoxyethyl acrylate, phenoxyethyl methacrylate, methylmethacrylate and acrylamide. Especially preferred areacrylic acid, isobornyl acrylate and N-vinyl caprolactam.

Examples of compounds with two or more ethylenically unsaturated groups which are suitable in the curable liquid precursor of the polymer comprised in the layer or layers of the multilayer film of the present invention include $C_2$ - $C_{12}$ hydrocarbondiol diacrylates such as 1,6-hexanediol diacrylate, $C_4$ - $C_{14}$ hydrocarbon divinylethers such as hexanediol divinylether and $C_3$ - $C_{12}$ hydrocarbontriol triacrylates such as trimethylolpropanetriacrylate. Two or higher acrylate functional monomers and, in particular, two- or three acrylate-functional monomers are preferred.

The liquid precursors described above are to exemplify the present invention without limiting it.

The multilayer films obtainable by the method of the present invention are characterized by especially advantageous properties.

The liquid precursor layers coated onto the substrate exhibit an excellent uniformity of their respective thickness normal to the surface of the substrate. The average deviation of the thicknesses of the cured layers of the multilayer film in a direction normal to the downstream direction preferably is over an arbitrarily selected distance of 10 mm less than 5 %, more preferably less than 2.5 % and especially preferably less than 2 %. The excellent uniformity of the cured multilayer films can be taken, for example, from the cross-sectional microphotos in Fig. 4 - 8 below.

The interfaces between adjacent cured layers of the multilayer film preferably are clearly recognizable and sharp-edged which can be demonstrated, for example, by adding a dye to one of a pair of adjacent cured layers while not adding a dye to the other cured layer. Cross-sectional microphotos from such multilayer films preferably show a sharp transition from the dyed layer to the non-dyed layer, and the interface preferably is not blurred.

Adjacent layers of the multilayer films are, however, also securely anchored to each other. When comparing a multilayer film prepared according to the method of the present invention with a multilayer film obtained by laminating the corresponding solid films into a multilayer laminate film, the cohesive strength of the multilayer films of the present invention as evaluated, for example, in terms of the average peel force when trying to delaminate the different layers by a T-peel test preferably is at least as high and more preferably higher than the cohesive strength of the corresponding laminated multilayer films of the prior art.

For some applications it might be beneficial to allow a controlled small scale diffusion at the interface between two adjacent liquid precursor layers to get upon curing, for example, an enhanced anchoring of the two adjacent layers and consequently an enhanced mechanical strength of the multilayer film. The appearance of the interface between two adjacent liquid precursor layers can mainly be influenced by the viscosity of the liquid precursors of the two adjacent precursor layers. The interfacial area between two adjacent precursor layers typically is the more sharp-edged the higher the viscosity of the two liquid precursors. Interfacial diffusion or micro-mixing can be enhanced by decreasing the Brookfield viscosity of at least one of the precursors of the adjacent layers to less than 5,000 mPas, more preferably less than 2,500 mPas and especially preferably to from 500 - 1,500 mPa·s. The interfacial diffusion is further enhanced when the liquid precursors of both adjacent layers exhibit, independently from each other, a Brookfield viscosity of less than 5,000 mPa·s, more preferably of less than 2,500 mPa·s and especially preferably of between 500 - 1,500 mPa.s.

The top cured polymer layer of the multilayer film preferably exhibits an excellent finish of its exposed surface, i. e. low surface roughness as evaluated, for example, in terms of the surface roughness $R_z$.

It was found by the present inventors that the finish of the exposed surface of the top cured polymer layer is not adversely affected or is even improved, respectively, if the top liquid precursor layer of the stack of liquid precursor layer is covered with a release liner. As is schematically illustrated in Fig. 1 below, the release liner may be guided by the upstream surface of the backwall of a coating device comprising coating chambers. Alternatively, the backwall can be provided by the release liner which is suitably tensioned and deflected by rollers to provide a transversely extending

edge facing the substrate. In this case the additional back wall can be omitted.

Thus the release liner is applied to the exposed surface of the top liquid precursor layer simultaneously with the formation of such layer. The release layer is smoothly attached to the top layer in a snug fit without exerting too much pressure or insufficient pressure, respectively, during the application of the liner.

In prior art methods of making multilayer films a release liner, if present, was typically applied to the exposed surface of the top precursor layer subsequent to the formation of such layer. In such methods the release liner was laid upon the exposed top layer using, for example, a guiding roller. Such method requires an exact positioning of the distance between the surface of the substrate and the guiding roller which may be difficult under practical conditions. If the distance is too small to much pressure is exerted onto the top liquid precursor layer which results in a distortion of the topmost layer and in the formation of a fluid bead. The fluid bead induces a turbulent flow in the stack of liquid precursor layer so that mixing may occur.

If the distance between the guiding roller and the substrate is too large, air-entrapment may occur between the release liner and the exposed surface of the top liquid precursor layer. This results in a poor surface finish of the cured topmost layer of the multilayer film characterized by high $R_z$ values. Also, curing of the topmost surface may be oxygen-sensitive. If the top liquid precursor layer comprises, for example, the precursor of an acrylate based pressure-sensitive adhesive, UV curing of such precursor will be impeded by the presence of oxygen so that an insufficient curing and hence distinctly diminished properties of the pressure-sensitive adhesive layer may occur.

The method of the present invention furthermore allows for the incorporation of solid films such as polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres. In a coating apparatus containing one or more coating chambers such solid films can be introduced along the upstream surface of the front wall, any intermediate wall and the back wall, respectively. In the schematic illustration of Fig. 1 below a solid film is guided via the upstream surface of the first upstream intermediate wall thereby positioning the solid film in a snug fit on the second liquid precursor layer provided by the first upstream coating chamber. Fig. 1 furthermore shows the insertion of a release liner along the upstream side of the back wall. This is exemplary only, and the person skilled in the art will select the solid film or films suitable for providing a specific multilayer film with a desired profile of properties and will vary the arrangement and the number of such films within the multilayer film.

If the solid film is a release liner, this may be arranged beneath the bottom precursor layer or on top of the top layer of the multilayer film to protect the exposed surfaces of the bottom and top precursor layers, respectively. A release film when included into the multilayer film as an intermediate layer between the bottom and the top polymer layer, respectively, introduces a predetermined breaking surface into the multilayer film. This can be used, for example, to prepare a stack of multilayer films in a single production process from which the individual multilayer films can be easily obtained by peeling along the release surface.

Solid films other than release liners form an integral part of the cured multilayer film. The solid films are also referred to as backing in the cured multilayer film. The method of forming multilayer films of the present invention is highly versatile and allows for making a broad range of multilayer films with tailor-made properties.

While the present inventors do not wish to be bound by such considerations, it is speculated that the method of the present invention establishes a high quality laminar flow regime which is not accessible by prior art methods.

In the method of the present invention the flow of the liquid curable precursors mainly results from shear forces. These are provided by the substrate or the layers already attached to it moving in the downstream direction thereby exerting a drag flow onto the respective liquid precursor. Shear forces are also provided by the solid film or films, respectively, if present, moving initially along the upstream side of the coating knife towards the substrate and then, after being deflected at the transversely extending edge of the coating knife, parallel to the susbstrate in the downstream direction. It is believed that the volume flow resulting from these shear forces is essentially laminar and stable and that any turbulences which might occur, for example, when forming the liquid precursor layers at the respective gaps, are effectively dampened by essentially simultaneous applying the liquid precursor layers and, optionally, the solid film or films onto each other. The essentially simultaneous application of an upper adjacent liquid precursor onto a lower liquid precursor layer is preferably provided by arranging the coating knives apprpriately. The essentially simultaneous application of an adjacent upper solid film, if present, is preferably provided by guiding such film along the upstream surface of the coating knife forming the lower precursor layer.

The multilayer films obtainable by the method of the present invention furthermore exhibit essentially homogenous properties such as, for example, an essentially homogenous thickness of the cured polymer layers in the transverse direction. It is speculated by the present inventors that the stable flow pattern established by the shear force regime of the present invention results in a flow history of the liquid precursors which is essentially constant over the coating width for all precursors. In the method of the present invention the volume flow mainly resulting from the shear force regime is mainly controlled by the gaps between the respective coating knives and the substrate, the arrangement of the coating knives relative to each other, the geometry of the bottom portion of the coating knives, the speed of the substrate and the viscosity of the curable liquid precursors. These parameters are easy to control and can be varied widely without

adversely affecting the stable flow pattern which is essentially laminar and essentially homogenous in the transverse direction.

The method of the present invention provides novel multilayer films with unique properties.

In the prior art multilayer films were obtained by die coating processes which employ feed control devices such as gear pumps to provide a volume flow of the liquid precursors through the manifolds of the die to the coating orifice where the precursors are coated onto a moving substrate. It is believed that the flow regime of the die coating process which is different from that of the method of the present invention, is less stable and more complicated because of the combination of a forced volume flow provided by the gear pumps with the drag flow induced by the moving substrate. It is furthermore believed that for the die coating process the flow history of the liquid precursors is not constant in the transverse direction which results in inhomogenous transverse properties of the multilayer films thus prepared.

The method of the present invention is preferably employed at ambient pressure so that the liquid precursors are preferably only subject to the hydrostatic pressure of the liquid precursor supply. The liquid precursors are preferably supplied so that the hydrostatic pressure is essentially the same for the different precursors or at least about 50 % relative to the maximum value of the hydrostatic pressure. If desired, differences in the hydrostatic pressure between different precursors can be compensated by selectively pressurizing the liquid precursors. It is also possible, though generally not preferred, to provide over-pressure for example as a gas over-pressure to the liquid precursors provided, however, that such -over-pressure is sufficiently low so that the volume flow of the liquid precursor keeps to be dominated by the shear forces exerted by the substrate and, optionally, the solid films.

In a preferred embodiment, multilayer films according to the present invention comprise at least two superimposed polymer layers wherein the top layer comprises a polyurethane polymer and wherein the bottom layer comprises a (meth)acrylate based pressure-sensitive adhesive, the multilayer film having a maximum wave-front aberration of a wavefront resulting from a planar wavefront of a wavelength of $\lambda$ = 635 nm impinging normally on the top layer and transmitted through the multilayer film, measured as the peak-to-valley value of the transmitted wavefront, of less than 6 $\lambda$ (= 3,810 nm).

The value of the maximum aberration of a planar wavefront measured subsequent to its transmission through a multilayer film of the present invention characterizes the distortion the wavefront experiences as a result of its interaction with the multilayer film. The lower the value of the maximum wavefront aberration the higher the optical quality of the film (e.g. less distortions of an image projected through the film).

The top liquid precursor layer is provided by a polyurethane polymer. The term polyurethane polymer as used above and below relates to cured polymers comprising at least one urethane bond

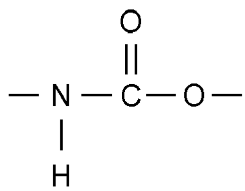

which is typically formed by the reaction of isocyanate-functional and hydroxyfunctional monomers. In the present invention the term polyurethane polymer preferably relates to a polymer obtainable by the polymerization of a liquid precursor comprising at least one ethylenically unsaturated compound comprising at least one urethane bond.

In the present invention the polyurethane polymer is preferably obtained by curing a liquid precursor comprising one or more mono- and/or poly(meth)acrylate functional oligomer compounds comprising at least one urethane bond, one or more monomer compounds comprising one or more ethylenically unsaturated groups but no urethane bond and one or more photoinitiators. Such preferred liquid precursor of a polyurethane polymer is decribed in detail above.

The bottom layer of the preferred multilayer films with both superior mechanical and optical properties preferably comprises a cured (meth)acrylate-based pressure-sensitive adhesive which is preferably obtained by curing the preferred liquid precursor of a corresponding pressure-sensitive adhesive disclosed above.

It was found by the present inventors that the multilayer film of the present invention comprising a top layer comprising a polyurethane polymer and a bottom layer comprising a (meth)acrylate based pressure-sensitive adhesive layer exhibits favourable optical properties such as, in particular, a low maximum aberration of a planar wavefront subsequent to its transmission through the cured multilayer film, a high transmission, a low haze and/or a low colour shift as can be evaluated by the methods described in the test section below.

The top layer of the multilayer film comprising a polyurethane polymer furthermore imparts advantageous mechanical properties such as a high scratch-resistance to the multilayer film as can be evaluated by the methods in the test section below.

Detailed description of the Figures

*Fig. 1* depicts a coating apparatus 1 useful in the present invention. The coating apparatus 1 comprises a front wall 11, two intermediate walls 13 and a back wall 12 forming three coating chambers 16. A rolling bead 17 is arranged upstream to the front wall 11. The walls 11, 12, 13 are formed by coating knives which are arranged normally to a substrate 2 moving in the downstream direction 3 so that gaps 100 are formed between the bottom portion of the coating knives 11, 12, 13 and the substrate. The coating chambers each have a width 101 and are filled with liquid precursors. A solid film 14 is applied via the upstream surface of the upstream intermediate wall 13 and introduced between the second and the third liquid precursor layers. A release film or liner 15 is applied via the upstream surface of the backwall 12 and attached on top of the top precursor layer.

*Fig. 2a* is an enlarged representation of the coating knife which is used as a front wall 11, intermediate wall 13 and back wall 12 in the coating apparatus of Fig. 1. The coating knife has a bull-nose or radius type profile providing a transversely extending coating edge 18. *Fig. 2b* is an enlarged cross-sectional view of the bottom portion of the coating knife of Fig. 2a showing the bull-nose profile in more detail. The bull nose is represented by the circumference of a quadrant circle having a radius R.

*Fig. 3* is a schematic representation of a measurement arrangement suitable for measuring the maximum wavefront aberration of a plane wavefront 204 transmitted through a cured multilayer film 20 mounted onto a glass plate 205. The light is provided by a fiber coupled laser diode 201, widened into a spherical wavefront 202 and collimated by an aspheric collimation lens 203. The plane wavefront 204 of the collimated light passes through the sample 20 and the glass plate 205 and is imaged on a Shack-Hartmann sensor 210 by a Kepler telescope 207. The Shack-Hartmann sensor determines the local slope of the optical wavefront using a microlens array and a CCD camera chip. The deformed wavefront is then reconstructed by the software of the Shack-Hartmann measuring device by numerical integration. The maximum wavefront aberration of a plane wavefront resulting from the multilayer film alone is obtained by deducting the value of the maximum wave front aberration of a plane wavefront measured for the glass plate alone.

*Figs.Figs.s. 4 - 8* are cross-sectional microphotographs of the cured multi-layer films prepared in Examples 2, 5, 11, 12 and 13, respectively. The figures are described in detail in the corresponding Example sections.

*Figs. s 9a* - 9e are Siemens Star test images for the multilayer film of Example 22 (Fig. 9b) and of comparative, flexible and conformable 2-layer films comprising a polyurethane or polyethylene top layer and a pressure-sensitive adhesive bottom layer commercially available from 3M (Figs. 9c - 9e). *Fig. 9a* is a Siemens Star test image for a glass plate used as a reference. The figures are explained in more detail in the Example section below.

Examples

The present invention will be illustrated by the Examples described below. Prior to this, the coating apparatus used in the Examples and test methods which are used to characterize the liquid precursors and/or the cured multilayer films are described. Above and below concentrations are given as wt. % or as pph (parts per hundred resin). The term wt. % gives the mass of the (meth)acrylate functionalized monomers, oligomers or polymers, respectively, with the exception of crosslinker compounds with respect to the total mass of such meth)acrylate functionalized monomers, oligomers and polymers with the exception of crosslinkers whereby such total mass is set as 100 wt. %. The amount of other compounds such as crosslinkers, initiators or additives such as fillers, polymer adds, tackifiers or plasticizers is given in parts by weight designated as pph (parts per hundred resin) relative to such total mass of 100 wt. %.

*Coating apparatus*

The coating apparatus used in the Examples is schematically shown in Fig. 1. The coating apparatus comprised up to four coating knives normally arranged with respect to the substrate moving beneath the coating apparatus in the downstream direction. The coating knives were held by transverse carrier elements rigidly mounted to two longitudinal carrier elements extending in the downstream direction. The transverse carrier elements were extending normal to the downstream direction.

The width of the three coating chambers in the downstream direction could be varied as follows:

| Coating chamber | Range of width in downstream direction [mm] | Range of volumes [ml] of coating chambers |
|---|---|---|
| I | 4-157 | 26-1005 |
| II | 4-157 | 26-1005 |
| III | 4-157 | 26-1005 |

The coating chambers were bordered in the direction normal to the downstream direction by the front wall and the first intermediate wall (coating chamber I), by the 1st and 2nd intermediate walls (coating chamber II) and by the 2nd intermediate wall and the back wall (coating chamber III). The coating chambers were bordered in the downstream direction by two side scrapers made from PTFE bars which were arranged normal to the coating knives. The height of the coating chambers as measured from the surface of the substrate to the exposed upper surface of the transverse carrier elements was about 40 mm for each of the three coating chambers providing the volumes of the coating chambers as listed in the table above.

The coating knives were each made from 8 mm thick rigid aluminium plates having a bull nose type profile which is shown in Figs.Figs. 2a and 2b. The profiles of all four coating knives were identical. The bull nose was represented by the circumference of a quadrant circle having a radius of 5 mm. The gap width of the respective coating knife relative to the surface of the substrate could be adjusted free of clearance by pre-loaded screws that were supported by the transverse carrier elements.

The gap width between the transversely extending edge of the respective coating knife and the substrate of the surface could be varied as follows:

| Coating knife | Range of gap with [$\mu$m] |
|---|---|
| Front wall | 0 - 5,000 |
| 1st intermediate wall | 0 - 5,000 |
| 2nd intermediate all | 0 - 5,000 |
| Back wall | 0 - 5,000 |

The substrate was unwound from a winder and moved beneath the coating apparatus with a downstream speed which could be varied between 0.01 m/min and 6 m/min. The substrate was tensioned by tension controlled unwinding rollers, and two rollers arranged after the curing station transported the cured film.

The coating apparatus was furthermore equipped so that a release liner, upon unwinding from a winder, could be guided by the upstream surface of the back wall coating knife and attached via the bull nose profile of the coating knife directly onto the exposed surface of the topmost liquid precursor layer of the stack of layers. This is schematically shown in Fig 1.

The coating apparatus was furthermore equipped so that a backing, upon unwinding from a winder, could be guided by the upstream surface of the front wall or the 1st or 2nd intermediate wall, respectively, and attached via the corresponding bull nose profiled edge of the coating knife directly onto the respective liquid precursor layer applied via such intermediate wall coating knife. The backing formed an integral part of the multilayer film upon curing.

The stack of liquid precursor layers thus prepared was subsequently passed by a UV-curing station having a length of 3 m. Curing was effected both from the top, i. e. in a direction towards the exposed liquid precursor layer optionally covered with a release liner and from the bottom, i. e. in a direction towards the substrate whereby the intensities provided in both directions were set at equal levels. The radiation was provided by fluorescent lamps at a wavelength between 300 - 400 nm with a maximum at 351 nm. The total radiation intensity irradiated cumulatively from top and bottom and the respective length of the two coating zones was as follows:

| | Zone 1 (length 200 cm) | Zone 2 (length 100 cm) |
|---|---|---|
| Total intensity [$mW/cm^2$] | 2.07 | 4.27 |

Test methods used

*Brookfield viscosity*

The viscosity of the liquid precursors was measured at 25 °C according to DIN EN ISO 2555:1999 using a Brookfield Digital Viscosimeter DV-II commercially available from Brookfield Engineering Laboratories, Inc.

*90° peel adhesion*

A sample of a cured multilayer film comprising two layers and having dimensions of 12.7 mm wide by 200 mm long was provided. One of the layers was a pressure-sensitive adhesive layer covered with a release liner, and the other layer was a non-sticky polyurethane polymer layer. Both multilayer films prepared according to the method of the present invention and comparative multilayer films obtained by lamination of the individual layer were tested.

The release liner was removed from the pressure-sensitive adhesive layer and the multilayer film was attached through its exposed adhesive surface onto a clean glass plate using light finger pressure. Before applying the multilayer film, the glass plate was wiped three times with methyl ethyl ketone and once with heptan. The multilayer film was rolled twice in each direction with a standard FINAT test roller (6.8 kg) at a speed of approximately 10 mm/s. After applying the multilayer to the glass surface the resulting assembly was held for a period of 24 h at ambient conditions before testing. The peel adhesion was then measured using a tensile testing apparatus (Model Z020 from Zwick GmbH, Ulm, Germany) at a peel speed of 300 mm/min. The test plate was grasped in one movable jar for 90° peel tests of the tensile tester. The sample multilayer film was folded back at an angle of 90° and its free end grasped in the upper jaw of the tensile tester in a configuration commonly utilized for 90° measurements. Three samples were measured and the results averaged. The results are reported in N/12.7 mm.

*T-peel strength*

A sample of a multilayer film comprising two layers and having dimensions of 12.7 mm wide by 200 mm long was provided. One of the layers was a pressure-sensitive adhesive layer covered with a release liner, and the other layer was a non-sticky polyurethane polymer layer. Both multilayer films prepared according to the method of the present invention and comparative multilayer films obtained by lamination of the individual layers were tested.

3M double-sided pressure-sensitive adhesive tape 444 was attached to the non-sticky surface of the polyurethane based polymer layer of the multilayer film. The relase liner was removed from the pressure-sensitive adhesive layer of the multilayer film and the resulting assembled laminate film was placed between two strips of anodized aluminium using light finger pressure and leaving two 25 mm long free aluminium tabs at the end of each aluminium strip. The resulting assembled laminate film was rolled twice in each direction with a standard FINAT test roller (6.8 kg) at a speed of approximately 300 mm/min. The samples were held for 24 h at ambient conditions before testing. The free aluminium tabs were bent back at 90° in opposite directions and respectively clamped in the upper and lower jaws of a tensile testing apparatus (Model Z020 from Zwick GmbH, Ulm, Germany) and separated at a peel speed of 300 mm/min. Three samples were measured and the results averaged. The results are reported in N/12.7 mm.

*Optical properties of the multilayer films*

*Sample preparation:*

A sample of a multilayer film comprising two layers and having dimensions of 6 cm wide by 6 cm long was provided. One of the layers was a pressure-sensitive adhesive layer covered with a release liner, and the other layer was a non-sticky polyurethane polymer layer. Both the multilayer films prepared according to the method of the present invention and comparative commercially available from 3M as indicated below were tested.

The release liner was removed from the pressure-sensitive adhesive layer of the multilayer films. The exposed pressure-sensitive adhesive surface of the multilayer film was rinsed with water to reduce initial adhesion and to ensure defect free lamination of the film through its adhesive surface to a clean 2 mm thick clear float glass plate obtainable from Saint-Gobain Glass Deutschland GmbH, Germany. After wet lamination, remaining water was carefully removed with a lint free cloth and the samples were stored for at least 16 h at room temperature to dry completely.

*a) Transmission loss, clarity and colour shift of multilayer films and reflection from the surface of the topmost exposed cured layer of the multilayer film*

The samples of a multilayer film laminated onto glass were placed on the sample holder of the HunterLab

UltraScan XE measuring system, commercially available from Hunter Associates Laboratory, Inc., Reston, VA, USA. The samples were evaluated with an integrating sphere ("Ulbricht-Kugel") using a D65 light source and an observation angle of 2°. The 2 mm thick glass plate specified above was used without the multilayer film as a reference.

The colour coordinates of the multilayer film were measured according to test method CIE 1931 and reported in terms of Y, x, y-values. The colour shift relative to the reference glass plate was evaluated in terms of dx and dy values, respectively, representing the difference of the x and y values of the multilayer film with respect to the x and y values of the plain glass plate.

The transmission was measured as the total transmission which is a combination of regular and diffuse transmission. The measurement was conducted according to ASTM E 1438.

The reflection was measured as the total reflection which is a combination of diffuse and specular reflection. The measurement was conducted as is described in DIN 5036, part 3.

The haze was measured in the transmissive mode according to ASTM D-1003-95. The haze is defined as the ratio of the diffuse transmission over the total transmission.

*b) Optical quality of the multilayer film*

*Siemens Star test*

A printed Siemens Star with 36 black and 36 white sectors and a diameter of 144 mm was fixed on a vertical wall. A digital photo camera, Canon EOS 450 D, obtainable from Canon Deutschland GmbH, Krefeld, Germany, was placed in front of the Siemens Star with a distance of 1002 mm between lens and Siemens Star. A multilayer film sample laminated on glass was then placed between camera and Siemens Star, with a distance of 750 mm to the Siemens Star and 250 mm to the camera lens, respectively. The Siemens Star and the sample were oriented normal to and centred to the optical axis of the camera.

The focal length of the camera was set to 55 mm with an aperture of 15. The Camera was set to highest resolution mode, the sensitivity to ISO 100. Lighting conditions were adjusted accordingly to allow for a well exposed digital image.

An imaging device may not perfectly reflect the pattern with alternating white and black sectors of the Siemens Star. Beginning in the middle of the pattern, a fuzzy zone occurs, the so-called grey ring, where the black and white sectors could not be distinguished. The size of the grey ring was used to determine the optical quality of the films.

The digital picture was modified with a picture editing program or presentation program like Microsoft PowerPoint. Here, the contrast of the picture was set to 100 % resulting in a black-or-white picture. Then a thin circle-line has to be positioned within the picture to measure the resulting black circle (grey ring). If the area is not exactly a circle the line must be positioned such that it represents the mean of most sectors of the Siemens Star. This circle line represents the grey ring (inner circle of the Siemens Star). The diameter of the small circle was looked up in the software and was recorded as "d". A second circle line was positioned along the outer perimeter of the Siemens Star. The diameter of this circle was measured and recorded as "D". The diameter of the printed Siemens star of 144 mm was used as reference value "D_real".

The resolving power of a given optical system could be characterized by the spatial frequency of an object detail that still could be resolved. Commonly, the spatial frequency is described as the number of black and white line pairs per mm (lp/mm) that could be distinguished by the optical system. The spatial frequency of the Siemens Star used with n = 36 pairs of black and white sectors is 0.08 lp/mm at the outer perimeter and increasing to inifinite lp/mm in the centre.

The resolving power r in lp/mm for the measurements of the samples could be calculated as follows:

$$r = (n * D)/(d * D_real * \pi)$$

The higher the spatial frequency evaluated for the resolving power r, the more details of an object could be resolved and the better the performance of the tested sample.

*Measuring of wavefront deformation*

The deformation of an optical wavefront caused by a multilayer film obtained by the method of the present invention or by comparative multilayer films, respectively, was measured with an optical analysis system comprising a Shack-Hartmann Sensor (SHS). The multilayer film samples laminated onto glass were prepared as described in the

Sample Preparation section above and placed on the sample holder of the SHSinspect-TL-SHR-2" optical testing system, commercially available from optocraft GmbH, Erlangen, Germany. The sample is illuminated with light of 635 nm wavelength provided by a fibre coupled laser diode and collimated by a high accuracy aspheric collimation lens. The plane wavefront of the collimated light passes through the sample and is imaged on the Shack-Hartmann sensor by a Kepler-telescope. The sample is located in the focal plane of the Kepler-telescope so that deformations of the optical wavefront induced by the sample are imaged on the Shack-Hartmann sensor. The Shack-Hartmann sensor determines the local slope of the optical wavefront using a micro-lens array and a CCD camera chip. The software of the measuring system then reconstructed the deformed wavefront by integration. The optical quality of the samples was characterized by the maximum deformation of the wavefront, recorded as the "peak-to-valley value" of the deformed wavefront for an evaluated diameter of 30 mm and measured in multiples of the used wavelength. The lower the value of the maximum wavefront aberration the higher the optical quality of the film (e.g. less distortions of an image projected through the film).

The wavefront sensor system was operated under the following conditions:

| | |
|---|---|
| Max. diameter of surface area evaluated: | up to 53 mm |
| Diameter of surface evaluated | 30 mm |
| Light source: | $\lambda$ = 635 nm, coupled to single-mode fiber |
| SHSCAM: | SHR-150,<br>lateral resolution: 78x59 microlenses |
| Illumination: | plane wave illumination with auxiliary collimation lens |

*Mechanical quality of the exposed surface of the topmost cured layer of the multilayer film*

*Sample preparation*

A sample of a multilayer film comprising two layers and having dimensions of 4 cm wide by 15 cm long was provided. One of the layers was a pressure-sensitive adhesive layer covered with a release liner, and the other layer was a non-sticky polyurethane polymer layer. The release liner applied to the surface of the adhesive layer was removedand the sample was attached to a 3 mm thick glass substrate.

*a) Measurement of the abrasion resistance*

A 2.54 cm x 2.54 cm large pad of steel wool of the grade # 0000 available from hutproducts.com under the designation "113-Magic Sand" was laminated onto a 300 g steel block having a square cross-section 2.54 cm x 2.54 cm wide and a height of 6 cm. The block was laterally moved over the test sample without exerting any additional normal force by hand. One forth-and-back movement was counted as one cycle. It was measured after how many cycles first slight irreversible scratches appeared on the exposed surface of the test samples.

*b) Pencil hardness (Ericson test)*

Pencils of different hardness are sharpened and are written with - with normal hand pressure - on the exposed surface of the test sample. Pencils having a hardness of 6B (the softest) to 9H (the hardest) were employed starting with the softest.

The test consists in defining the hardest pencil which does not leave irreversible traces on the exposed surface of the topmost cured layer.

*List of materials used*

GENOMER 4316, aliphatic trifunctional polyurethane acrylate, viscosity (mPas) 58,000 at 25 °C, Tg 4 °C, commercially available from Rahn AG, Zurich, Switzerland.

GENOMER 4312, aliphatic trifunctional aliphatic polyester urethane acrylate, viscosity (mPas) 50,000 - 70,000 at 25°C, commercially available from Rahn AG, Zurich, Switzerland.

MAUS oligomer, alpha, omega-dimethacryloxyurea-polydimethylsiloxane, $M_w$~ 14.000, prepared as described in WO 92/16,593, p.26 (where it is referred to as 35K MAUS).

SR 285, tetrahydrofurfuryl acrylate (THF-acrylate), commercially available from Cray Valley, Paris, France.

Isooctyl acrylate (IOA), ester of isooctylalcohl and acrylic acid, commercially available from Sartomer Company

(CRAY VALLEY), France.

Acrylic acid (AA), commercially available from BASF AG, Germany.

2-Ethylhexyl acrylate (2-EHA), commercially available from BASF AG, Germany.

SR506D, isobornyl acrylate (IBA), monofunctional acrylic monomer with a high Tg of 66 °C, commercially available from Sartomer Company (CRAY VALLEY), France.

1,6-Hexanediol diacrylate (HDDA), fast curing diacrylate monomer, commercially available form Sartomer (CRAY VALLEY), France.

Sartomer SR399LV, low viscosity dipentaerythritol pentaacrylate, commercially available from Sartomer Company (CRAY VALLEY), France.

SR306, tripropyleneglycol diacrylate (TPGDA), commercially available from Sartomer Company (CRAY VALLEY), France..

F-oligomer II is a heptafluoropropyleneoxide (HFPO) containing oligomer. For the preparation 0,075 eq of (HFPO)-alc, [(F(CF(CF$_3$)CF$_2$O)$_{6,85}$- CF(CF$_3$)CF$_2$(O)NH CH$_2$CH$_2$OH, synthesized following the procedure of WO 2007/124,263, pp. 19 - 21, "2. Synthesis of Intermediates"], 0,5 eq of Tolonate HDB, a HMDI biuret available from Rhodia, and 0,425 eq of Sartomer SR 344, pentaerythritol triacrylate available from Sartomer Company, are reacted following the procedure as described in WO 2007/124,263, p. 23, Example 19.

DAROCUR 1173, 2,2-dimethyl-2-hydroxy acetophenone, commercialy available from Ciba Specialty Chemicals, Basel, Switzerland.

Omnirad BDK, 2,2-dimethoxy-2-phenylacetophenone (UV-initiator), commercially available from iGm resins, Waalwijk, The Netherlands.

Tego Rad 2100, silicone acrylate, commercially available from Evonik Tego Chemie GmbH, Germany.

Irgacure 500, 1:1 mixture by weight of 50 % 1-hydroxy-cyclohexyl-phenyl-ketone and 50 % of benzophenone , liquid photoinitiator, commercially available from Ciba Specialty Chemicals, Basel, Switzerland.

VAZPIA, acrylamidoacetyl photoinitiator, prepared as described in US 5,506,279, col. 14, Example 1.

ORASOL RED 2B red color, commercially available from Ciba Specialty Chemicals, Basel, Switzerland.

EPODYE YELLOW, powdered fluorochrome, commercially available from Struers, Germany.

*List of curable liquid precursors used*

*Liquid precursor I*

94.95 wt. % of GENOMER 4316 and 5.05 % wt. % of THF-acrylate were combined in a glass vessel and mixed for 30 min. Then 1 pph of DAROCUR 1173 and 0.05 pph of Orasol Red B2 were added and the resulting mixture was stirred for 1 hour to provide liquid precursor I.

The composition of liquid precursor I and its Brookfield viscosity as determined by the test method described above are summarized in Table 1.

*Liquid precursor II*

94.95 wt. % of GENOMER 4312 and 5.05 % wt. % of THF-acrylate were combined in a glass vessel and mixed for 30 min. Then 1 pph of DAROCUR 1173 was added and the resulting mixture was stirred for 1 hour to provide liquid precursor II.

The composition of liquid precursor II and its Brookfield viscosity as determined by the test method described above are summarized in Table 1.

*Liquid precursor III*

69.7 wt. % of GENOMER 4316 and 30.3 wt. % of THF-acrylate were combined in a glass vessel and mixed for 30 min. Then 1 pph of DAROCUR 1173 and 0.05 pph of Epody Yellow were added and the resulting mixture was stirred for 1 hour to provide liquid precursor III.

The composition of liquid precursor III and its Brookfield viscosity as determined by the test method described above are summarized in Table 1.

*Liquid precursor IV*

90 wt. % of isooctyl acrylate and 10 wt. % of acrylic acid were combined with 0.04 pph of Omnirad BDK as a photoinitiator in a glass vessel and stirred for 30 minutes. The mixture was partially polymerized under a nitrogen-rich atmosphere by UV radiation to a degree of polymerization of appr. 8 % and a Brookfield viscosity of 3,200 mPa·s at 25

°C. Subsequent to the curing 0.12 pph of 1,6-hexanediol diacrylate as a crosslinker and 0.16 pph of Omnirad BDK as a photoinitiator were added and the resulting mixture was thoroughly stirred for 30 min. to provide liquid precursor IV.

The composition of liquid precursor IV and its Brookfield viscosity as determined by the test method described above are summarized in Table 1.

*Liquid precursor V*

84 wt. % of isooctyl acrylate, 15 wt. % of isobornyl acrylate, 1 wt. % of acrylic acid were combined with 0.02 pph of VAZPIA as a photoinitiator in a glass vessel and stirred for 30 minutes. The mixture was partially polymerized under a nitrogen-rich atmosphere by UV radiation to a degree of polymerization of appr. 8 % and a Brookfield viscosity of 4,720 mPa·s at 25 °C. Subsequent to the curing 0.05 pph of 1,6-hexanediol diacrylate as a crosslinker and 0.1 pph Omnirad BDK as a photoinitiator were added and the resulting mixture was thoroughly stirred for 30 min. to provide liquid precursor V.

The composition of liquid precursor V and its Brookfield viscosity as determined by the test method described above are summarized in Table 1.

*Liquid precursor VI*

89.3 wt. % of liquid precursor V was combined with 10.7 wt. % of MAUS oligomer and 0.25 pph of HDDA as a crosslinker in a glass vessel and stirred for 30 minutes to provide liquid precursor VI.

The composition of liquid precursor VI and its Brookfield viscosity as determined by the test method described above are summarized in Table 1.

*Liquid precursor VII*

76,1 wt. % of SR 399LV, 19,1 wt. % of TPGDA, 1,9 wt. % of F-oligomer II and 2,9 wt. % of Irgacure 500 were combined in a glass vessel and stirred for 30 minutes to provide liquid precursor VII.

The composition of liquid precursor VII and its Brookfield viscosity as determined by the test method described above are summarized in Table 1.

*Liquid precursor VIII*

84 wt. % of IOA, 15 wt. % of IBA and 1 wt. % of AA were combined with 0.2 pph of VAZPIA as a photoinitiator in a glass vessel and stirred for 30 minutes. The mixture was polymerized by UV radiation to a degree of polymerization of appr. 8 % and a Brookfield viscosity of 12,020 mPa·s at 25 °C. Subsequent to the curing 0.05 pph of 1,6-hexanediol diacrylate as a crosslinker and 0.1 pph of Omnirad BDK as a photoinitiator were added and the resulting mixture was thoroughly stirred for 30 minutes to provide liquid precursor VIII.

The composition of liquid precursor VIII and its Brookfield viscosity as determined by the test method described above are summarized in Table 1.

*Liquid precursor IX*

89.3 wt. % of liquid precursor VII was combined with 10.7 wt. % of MAUS oligomer, 0.25 pph of HDDA as a crosslinker in a glass vessel and stirred for 30 minutes to provide liquid precursor IX.

The composition of liquid precursor IX and its Brookfield viscosity as determined by the test method described above are summarized in Table 1.

*Liquid precursor X*

94.24 wt. % of GENOMER 4316 and 5.76 % wt. % of THF-acrylate were combined in a glass vessel and mixed for 30 min. Then 0.25 pph of DAROCUR 1173 was added and the resulting mixture was stirred for 1 hour to provide liquid precursor X.

The composition of liquid precursor X and its Brookfield viscosity as determined by the test method described above are summarized in Table 1.

*Liquid precursor XI*

94.57 wt. % of GENOMER 4316 and 5.43 wt. % of THF-acrylate were combined in a glass vessel and mixed

for 30 min. Then 0.6 pph of DAROCUR 1173 was added and the resulting mixture was stirred for 1 hour to provide liquid precursor XI.

The composition of liquid precursor XI and its Brookfield viscosity as determined by the test method described above are summarized in Table 1.

*Liquid precursor XII*

87.5 wt. % of IOA and 12.5 wt. % of AA were combined with 0.04 pph of Omnirad BDK as photoinitiator in a glass vessel and stirred for 30 minutes. The mixture was partially polymerized under a nitrogen-rich atmosphere by UV radiation to a degree of polymerization of appr. 8 % and a Brookfield viscosity of 4,120 mPa·s at 25 °C. Subsequent to the curing 0.12 pph of HDDA as a crosslinker, 0.16 pph of Omnirad BDK as photoinitiator and 5 pph of Tego Rad 2100 were added and the resulting mixture was thoroughly stirred for 30 minutes to provide liquid precursor XII.

The composition of liquid precursor XII and its Brookfield viscosity as determined by the test method described above are summarized in Table 1.

*Liquid precursor XIII*

87.5 wt. % of isooctyl acrylate and 12.5 wt. % of acrylic acid were combined with 0.04 pph of Omnirad BDK as a photoinitiator in a glass vessel and stirred for 30 minutes. The mixture was partially polymerized under a nitrogen-rich atmosphere by UV radiation to a degree of polymerization of appr. 8 % and a Brookfield viscosity of 4,100 mPa·s at 25 °C. Subsequent to the curing 0.1 pph of 1,6-hexanediol diacrylate as a crosslinker and 0.16 pph of Omnirad BDK as a photoinitiator were added and the resulting mixture was thoroughly stirred for 30 min. to provide liquid precursor XIII.

The composition of liquid precursor XIII and its Brookfield viscosity as determined by the test method described above are summarized in Table 1.

*Table 1*

| Precursor | Composition | Brookfield viscosity |
|---|---|---|
| I | 94.05 wt. % of GENOMER 4316<br>5.05 wt. % of THF-acrylate<br>1 pph of Darocur 1173<br>0.05 pph of Orasol Red B2 | 24,900 mPas |
| II | 94.05 wt. % of GENOMER 4312<br>5.05 wt. % of THF-acrylate<br>1 pph of Darocur 1173 | 19,900 mPas |
| III | 69.7 wt. % of GENOMER 4316<br>30.3 wt. % of THF-acrylate<br>1 pph of Darocur 1173<br>0.05 pph of Epodye Yellow | 1,650 mPas |
| IV | 90 wt. % of IOA<br>10 wt. % of acrylic acid<br>0.12 pph of HDDA<br>0.2 pph Omnirad BDK | 3,200 mPas |
| V | 84 wt. % of IOA<br>15 wt. % of IBOA<br>1.0 wt. % of acrylic acid<br>0.05 pph of HDDA<br>0.1 pph of Omnirad BDK<br>0.2 pph of VAZPIA | 4,720 mPas |
| VI | 89.3 wt. % of liquidLiquid precursor V<br>10.7 wt. % of MAUS oligomer<br>0.25 pph of HDDA | 3,380 mPas |
| VII | 76,1 wt. % of SR399LV | 480 mPas |

(continued)

| Precursor | Composition | Brookfield viscosity |
|---|---|---|
| | 19,1 wt. % of TPGDA<br>1,9 wt. % of F-oligomer II<br>2,9 wt. % of Irgacure 500 | |
| VIII | 84 wt. % of IOA<br>15 wt. % of IBA<br>1.0 wt. % of acrylic acid<br>0.05 pph of HDDA<br>0.1 pph of Omnirad BDK<br>0.2 pph of VAZPIA | 12,020 mPas |
| IX | 89.3 wt. % of liquidLiquid precursor V<br>10.7 wt. % of MAUS oligomer<br>0.15 pph of HDDA | 3,350 mPas |
| X | 94.24 wt. % of GENOMER 4316<br>5.76 wt. % of THF-acrylate<br>0.25 pph of Darocur 1173 | 24,800 mPas |
| XI | 94.38 wt. % of GENOMER 4316<br>5.42 wt. % of THF-acrylate<br>0.60 pph of Darocur 1173 | 25,000 mPas |
| XII | 87.5 wt. % of IOA<br>12.5 wt. % of acrylic acid<br>0.12 pph of HDDA<br>0.2 pph of Omnirad BDK<br>5 pph of Tego Rad 2100 | 4,120 mPas |
| XIII | 87.5 wt. % of IOA<br>12.5 wt. % of acrylic acid<br>0.1 pph of HDDA<br>0.2 pph of Omnirad BDK | 4,100 mPas |

*Examples 1 - 4*

A coating apparatus comprising two coating chambers I and II as described above and schematically shown in Fig. 1 was used. Release liner Hostaphan 2SLK, 75 μm, Mitsubishi was used as a substrate and the downstream speed was varied as is indicated in Table 2 below. The front wall and the back wall were each formed by coating knives each having a bull nose profiled bottom portion and dimensions as is described above. The width of the coating chamber in downstream direction and the gap between the transversely extending edge of the coating knifes and the surface of the substrate are indicated in Table 2 below.

Liquid precursor I was metered in front of the upstream side of the front wall as rolling bead I and liquid precursor III was filled into coating chamber II. Subsequent to the formation of the stack of the two liquid precursor layers, a release liner Hostaphan 2SLK, 75 μm, Mitsubishi was applied onto the exposed surface of the layer of liquid precursor III via the upstream surface of the back wall coating knife.

The stack of the two liquid precursor layers was cured by passing it along the UV-curing station described in the coating apparatus above to provide the multilayer film comprising two polyurethane layers.

Subsequent to curing the two release liners applied to the exposed top and bottom urethane layer, respectively, were removed and the thickness of the cured polyurethane layers was evaluated by taking microphotographs of cross-sections of the multilayer films. The cross-sections were obtained by freezing the samples in liquid nitrogen and breaking them (cryo fracture) and the microphotographs were taken using a light microscope (LM), Reichert Jung, Polyvar MET. Settings of equipment:

Polyvar MET: incident/transmitted light dark/bright field
Magnification: 100x

A microphotograph of a cross-section of the multilayer film of Example 2 is shown in Fig. 4. The microphotograph shows the multilayer film comprising 2 layers which are attached to a sample holder. The bottom layer attached to the sample holder is the red coloured polyurethane layer obtained from liquid precursor I, and the upper layer is the cured liquid precursor III. The dark area below the multilayer film is caused by the sample holder. It can be taken from Fig. 2 that the two layers are clearly and sharply separated from each other indicating that essentially no mixing occurs at the interface between the two polyurethane layers. The thickness value of the cured polyurethane layers is reported in Table 2 below. The clear layer on the top of the picture appears slightly red in some areas due to reflections of the light passing through the red layer. Changing the direction of illumination moves this effect to different locations in the picture.

*Table 2*

| Example | Downstream Speed [m/min] | Coating Chamber I | | | Coating chamber II | | | Multilayer film | |
|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] |
| 1) | 0.75 | I | rolling bead | 200 | II | 10 | 300 | 152 | 88 |
| 2 | 1.5 | I | rolling bead | 200 | II | 10 | 300 | 102 | 163 |
| 3 | 3 | I | rolling bead | 200 | II | 10 | 300 | 102 | 182 |
| 4 | 6 | I | rolling bead | 200 | II | 10 | 300 | 110 | 197 |

*Examples 5 - 11*

A coating apparatus comprising two coating chambers I and II as described above and schematically shown in Fig. 1 was used. Release liner Hostaphan 2SLK, 75 μm, Mitsubishi was used as a substrate, and the downstream speed was varied as is indicated in Table 3 below. The front wall and the back wall were each formed by coating knives each having a bull nose profiled bottom portion and dimensions as is described above. The width of the coating chamber in downstream direction and the gap between the bottom portion of the coating knifes and the surface of the substrate are indicated in Table 3 below.

Liquid precursor I or III, respectively, was metered in front of the upstream side of the front wall as rolling bead I and liquid precursor IV was filled into coating chamber II. Subsequent to the formation of the stack of the two liquid precursor layers, a release liner Hostaphan 2SLK, 75 μm, Mitsubishi was applied onto the exposed surface of the layer of liquid precursor III via the upstream wall of the back wall coating knife.

The stack of the two liquid precursor layers was cured by passing it along the UV-curing station described in the coating apparatus above to provide the multilayer film comprising a bottom exposed polyurethane layer and a top pressure-sensitive adhesive layer attached to the substrate formed by release liner Hostaphan 2SLK, 75 μm, Mitsubishi.

Subsequent to curing the release liner applied to the top exposed urethane layer and the bottom pressure-sensitive adhesive layer was removed and the thickness of the cured polyurethane and pressure-sensitive adhesive layers, respectively, was evaluated by taking microphotographs of cross-sections of the multilayer films. The cross-sections were obtained by freezing the samples in liquid nitrogen and breaking them (cryo fracture) and the microphotographs were taken using a light microscope (LM), Reichert Jung, Polyvar MET. Settings of equipment:

| | |
|---|---|
| Polyvar MET: | incident/transmitted light dark/bright field |
| Magnification: | 100x |

Cross-sectional microphotographs of the multilayer films of Examples 5 and 11 are shown in Figs. 5 and 6. The multilayer films of Example 5 and 11 each comprise 2 layers whereby the lower layer is attached in each case to a sample holder.

In the microphotograph of Fig. 5 (Example 5), the bottom layer of the multilayer film is the cured pressure-sensitive adhesive layer whereas the exposed top layer is the cured polyurethane layer. The clear layer of pressure-sensitive adhesive appears slightly red or yellow in some areas due to reflections of the light passing through the coloured polyurethane layer. Changing the direction of illumination moves this effect to different locations in the picture. It can be taken from Fig. 5 that the two layers of the multilayer film are clearly and sharply separated from each other indicating that essentially no mixing occured in the precursor multilayer film at the interface between the polyurethane and the pressure-sensitive adhesive layer.

In the microphotograph of Fig. 6 (Example 11) the bottom layer of the multilayer film is the cured pressure-sensitive adhesive layer whereas the top layer is the cured polyurethane layer. The clear layer of pressure-sensitive adhesive appears slightly cloudy because of the brittle behaviour of the polymer during the cryo fracture resulting in a glassy fracture pattern on the surface of the cross section. The top polyurethane layer appears slightly yellowish due to the yellow dye added to it with a small dark stripe at the top of the layer. Such stripe results from the portion of the multilayer sample extending behind the plane of the cross-sectional; such portion can be seen because the multilayer film is slightly bent in CD.

It can be taken from Fig. 6 that the two layers of the multilayer film are clearly and sharply separated from each other indicating that essentially no mixing occured in the precursor multilayer film at the interface between the polyurethane and the pressure-sensitive adhesive layer.

The thickness values of the cured polymer layers of the multilayer film are reported in Table 3 below.

*Table 3*

| Example | Downstream Speed [m/min] | Coating Chamber I | | | Coating chamber II | | | Multilayer film | |
|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] |
| 5 | 0.75 | I | rolling bead | 200 | IV | 10 | 300 | 130 | 53 |
| 6 | 1.5 | I | rolling bead | 200 | IV | 10 | 300 | 129 | 71 |
| 7 | 3 | I | rolling bead | 200 | IV | 10 | 300 | 121 | 92.5 |
| 8 | 6 | I | rolling bead | 200 | IV | 10 | 300 | 134 | 80 |
| 9 | 1.5 | III | rolling bead | 200 | IV | 10 | 300 | 122 | 71 |
| 10 | 3 | III | rolling bead | 200 | IV | 10 | 300 | 120 | 70 |
| 11 | 6 | III | rolling bead | 200 | IV | 10 | 300 | 122 | 90 |

*Examples 12 - 13*

A coating apparatus comprising three coating chambers I, II and III, respectively, as described above and schematically shown in Fig. 1 was used. Release liner Hostaphan 2SLK, 75 μm, Mitsubishi was used as a substrate, and the downstream speed was varied as is indicated in Table 4 below. The front wall, the intermediate wall and the back wall were each formed by coating knives each having a bull nose profiled bottom portion and dimensions as is described above. The width of the coating chambers in downstream direction and the gaps between the transversely extending edge of the coating knife and the surface of the substrate are indicated in Table 4 below.

Liquid precursor II or VII, respectively, was metered in front of the upstream side of the front wall as rolling bead I and liquid precursor I or III, respectively, was filled into coating chamber II. Liquid precursor IV was filled into coating chamber III. Subsequent to the formation of the stack of the three liquid precursor layers, a release liner Hostaphan 2SLK, 75 μm, Mitsubishi was applied onto the exposed surface of the layer of liquid precursor IV via the upstream wall of the back wall coating knife.

The stack of the three liquid precursor layers was cured by passing it along the UV-curing station described in the coating apparatus above to provide the multilayer film comprising a bottom exposed non-tacky layer, a middle polyurethane layer and a top pressure-sensitive adhesive layer attached to the substrate formed by release liner Hostaphan 2SLK, 75 μm, Mitsubishi.

Subsequent to curing the release liner applied to the top and bottom exposed layer of the multilayer film was removed and the thickness of the cured individual layers was evaluated by taking microphotographs of cross-sections of the multilayer films. The cross-sections were obtained by freezing the samples in liquid nitrogen and breaking them (cryo fracture) and the microphotographs were taken using a light microscope (LM), Reichert Jung, Polyvar MET. Settings of equipment:

Polyvar MET: incident/transmitted light dark/bright field
Magnification: 100x

A microphotograph of a cross-section of the multilayer film of Example 12 is shown in Fig. 7a. The microphotograph shows 3 layers of the cured multilayer film and a dark area below the film that is caused by the sample holder. The bottom layer of the multilayer film is the cured pressure-sensitive adhesive layer whereas the middle layer and the exposed top layer are cured polyurethane layers. The clear pressure-sensitive adhesive bottom layer appears streaky and slightly red in some areas due to reflections of the light passing through the red middle layer. The top clear polyurethane layer appears slightly green/yellow with a dark stripe at the top of the layer. Such stripe results from the portion of the multilayer sample extending behind the plane of the cross-sectional; such portion can be seen because the multilayer film is slightly bent in CD.

A macrophotograph of a cross-section of the multilayer film of Example 12 taken at a magnification of about 30x is shown in Fig. 7b under ambient light over a curved glossy black surface. Under these conditions top and bottom layers of the multilayer film appear clear, as stated above, and distinctly separated from the red coloured middle layer. The slightly blurrish appearance of the macrophotograph is due to a limited pixel number of the photograph taken with a Canon Poweshot SX 100 IS, obtainable from Canon Deutschland GmbH, Krefeld, Germany, using a focal length of 6 mm and a distance between lens and object of about 5 mm.

It can be taken from Fig. 7a that the three layers are clearly and sharply separated from each other indicating that essentially no mixing occurs at the interface between the two polyurethane layers as well as at the interface of the polyurethane layer and the pressure-sensitive adhesive layer. The thickness value of the cured layers is reported in Table 4 below.

A microphotograph of a cross-section of the multilayer film of Example 13 is shown in Fig. 8. The microphotograph shows 3 layers of the cured multilayer film and a dark area below the film that is caused by the sample holder. The bottom and the middle layers of the multilayer film are cured non-tacky polyurethane layers whereas the top layer is a pressure-sensitive adhesive layer. The top pressure-sensitive adhesive and the the bottom polyurethane layer of the multilayer film are clear but appear slightly yellow due to reflections of the light passing through the yellow coloured middle layer. Changing the direction of illumination moves this effect to different locations in the picture. It can be taken from Fig. 8 that the three layers are clearly and sharply separated from each other indicating that essentially no mixing occurs at the interface between the layers. The thickness value of the cured layers is reported in Table 4 below.

*Examples 14 - 18*

Hostaphan 2SLK, 75 μm, Mitsubishi was used as a substrate, and the downstream speed was varied as is indicated in Table 4 below. The front wall, the intermediate wall or walls, respectively, and the back wall were each formed by coating knives each having a bull nose profiled bottom portion and dimensions as is described above. The

width of the coating chambers in downstream direction and the gaps between the transversely extending edge of the coating knife and the surface of the substrate are indicated in Table 4 below.

Liquid precursor I or III, respectively, was filled into the upstream coating chamber I and liquid precursor IV was filled into coating chamber II. Subsequent to the formation of the stack of the two liquid precursor layers, a release liner Hostaphan 2SLK, 75 μm, Mitsubishi was applied onto the exposed surface of the layer of liquid precursor III via the upstream wall of the back wall coating knife.

The stack of the two liquid precursor layers was cured by passing it along the UV-curing station described in the coating apparatus above to provide the multilayer film comprising a bottom exposed polyurethane layer and a top pressure-sensitive adhesive layer attached to the substrate formed by release liner Hostaphan 2SLK, 75 μm, Mitsubishi.

The composition of the precursor multilayer film and the total thickness of the polymer layer of the cured multilayer film are summarized in Table 4 below.

The optical properties of the multilayer films measured according to the test method specified above are summarized in Tables 5 and 6 below.

*Table 4*

| Example | Down-stream speed [m/min] | Coating Chamber I | | | Coating chamber II | | | Coating chamber III | | | Multilayer film | | | |
|---|---|---|---|---|---|---|---|---|---|---|---|---|---|---|
| | | Liquid precursor | Down-stream width of coating chamber [mm] | Gap [μm] | Liquid precursor | Down-stream width of coating chamber [mm] | Gap [μm] | Liquid precursor | Down-stream width of coating chamber [m] | Gap [μm] | Thickness of bottom layer [μm] | Thickness of inter-mediate layer [μm] | Thickness of top layer [μm] | Total thickness [μm] |
| 12 | 0.71 | II | rolling bead | 100 | I | 10 | 200 | IV | 10 | 300 | 63 | 72 | 139 | 274 |
| 13 | 1.5 | VII | rolling bead | 80 | III | 10 | 300 | IV | 10 | 400 | 20 | 121 | 152 | 293 |
| 14) | 1.5 | I | rolling bead | 250 | VI | 10 | 300 | - | - | - | | | | 210 |
| 15 | 1.5 | I | rolling bead | 300 | VI | 10 | 300 | - | - | - | | | | |
| 16 | 1.5 | I | rolling bead | 300 | V | 10 | 300 | - | - | - | | | | 220 |
| 17 | 0.71 | I | rolling bead | 300 | V | 10 | 300 | - | - | - | | | | 210 |
| 18 | 1.5 | I | rolling bead | 250 | VIII | 10 | 300 | VI | | 300 | | | | 200 |

*Table 5: Haze, transmission loss and colour shift*

| Example | Y | x | y | Haze | Transmission loss | Colour shift dx | Colour shift dy |
|---|---|---|---|---|---|---|---|
| 14 | 90.2 | 0.3131 | 0.3302 | 1.88 | 0.6 % | 0.0005 | 0.0004 |
| 15 | 90.27 | 0.3132 | 0.3302 | 2 | 0.6 % | 0.0006 | 0.0004 |
| 16 | 90.5 | 0.3131 | 0.3302 | 1.05 | 0.3 % | 0.0005 | 0.0004 |
| 17 | 90.41 | 0.313 | 0.3302 | 1.19 | 0.4 % | 0.0004 | 0.0004 |
| 18 | 90.93 | 0.3129 | 0.3301 | 1.04 | -0.2 % | 0.0003 | 0.0003 |
| glass ref. | 90.77 | 0.3126 | 0.3298 | 0.56 | 0.0 % | 0 | 0 |

*Table 6: Reflection*

| Example | Y |
|---|---|
| 14 | 7.69 |
| 15 | 7.66 |
| 16 | 7.9 |
| 17 | 7.96 |
| 18 | 7.61 |
| glass ref. | 8 |

<u>*Examples 19 - 21*</u>

A coating apparatus comprising two coating chambers I and II as described above and schematically shown in Fig. 1 was used. Release liner Hostaphan 2SLK, 75 μm, Mitsubishi was used as a substrate, and the downstream speed was set as is indicated in Table 7 below. The front wall and the back wall were each formed by coating knives each having a bull nose profiled bottom portion and dimensions as is described above. The width of the coating chambers in downstream direction and the gap between the bottom portion of the coating knife and the surface of the substrate are indicated in Table 7 below.

Liquid precursors I, X or XI, respectively, were metered in front of the upstream side of the front wall as rolling bead I and liquid precursors IV or IX, respectively, were filled into coating chamber II. Subsequent to the formation of the stack of the two liquid precursor layers, a release liner Hostaphan 2SLK, 75 μm, Mitsubishi was applied onto the exposed surface of the top layer of liquid precursor IV or IX, respectively via the upstream wall of the back wall coating knife.

The stack of the two liquid precursor layers was cured by passing it along the UV-curing station described in the coating apparatus above to provide the multilayer film comprising a bottom exposed polyurethane layer and a top pressure-sensitive adhesive layer attached to the substrate formed by release layer Hostaphan 2SLK, 75 μm, Mitsubishi.

Subsequent to curing, the release liner applied to the bottom exposed polyurethane layer was removed and the total thickness of the cured polyurethane and pressure-sensitive adhesive dual layer film construction was measured.

The mechanical robustness of the top polyurethane layer of the multilayer films was evaluated by measuring the abrasion and scratch resitance as is described in the test section above. The results of the two tests described are summarized in Table 8.

*Table 7*

| Example | Downstream Speed [m/min] | Coating Chamber I | | | Coating chamber II | | | Multilayer film | | |
|---|---|---|---|---|---|---|---|---|---|---|
| | | Liquid Precursor | Downstream width of coating chamber [mm] | Gap [μm] | Liquid Precursor | Downstream width of coating chamber [m] | Gap [μm] | Thickness of bottom layer [μm] | Thickness of top layer [μm] | Total thickness [μm] |
| 19 | 0.71 | I | rolling bead | 350 | IX | 10 | 450 | N/A | N/A | 280 |
| 20 | 0.71 | X | rolling bead | 350 | IX | 10 | 450 | N/A | N/A | 280 |
| 21 | 0.71 | XI | rolling bead | 350 | IV | 10 | 450 | N/A | N/A | 280 |

*Table 8*

| Example | Number of abrasive cycles tolerated without surface damage | Maximum pencil hardness (Ericson test) |
|---|---|---|
| 19 | ≈ 500 | 9H |
| 20 | ≈ 600 | 9H |
| 21 | ≈ 700 | 9H |

*Example 22 and Comparative Example 1a - 1c*

A coating apparatus comprising two coating chambers I and II as described above and schematically shown in Fig. 1 was used. Release liner Hostaphan 2SLK, 75 μm, Mitsubishi was used as a substrate, and the downstream speed was set as is indicated in table 9 below. The front wall and the back wall were each formed by coating knives each having a bull nose profiled bottom portion and dimensions as is described above. The width of the coating chamber in downstream direction and the gap between the transversely extending edge of the coating knife and the surface of the substrate are indicated in table 9 below.

Liquid precursor X was metered in front of the upstream side of the front wall as rolling bead I and liquid precursor XII was filled into coating chamber II. Subsequent to the formation of the stack of the two liquid precursor layers, a release liner Hostaphan 2SLK, 75 μm, Mitsubishi was applied onto the exposed surface of the top layer of liquid precursor XII via the upstream wall of the back wall coating knife.

The stack of the two liquid precursor layers was cured by passing it along the UV-curing station described in the coating apparatus above to provide the multilayer film comprising a bottom exposed polyurethane layer and a top pressure-sensitive adhesive layer attached to the substrate formed by release liner Hostaphan 2SLK, 75 μm, Mitsubishi.

Subsequent to curing, the release liner applied to the bottom exposed urethane layer was removed and the thickness of the cured polyurethane and pressure-sensitive adhesive layers, respectively, was evaluated by microscopy of cross-sections of the multilayer films. The cross-sections were obtained by cutting the samples with sharp razorblades and the measuring of the thickness listed in Table 9 was realized by using a light microscope (LM), Reichert Jung, Polyvar MET. Settings of equipment:

Polyvar MET: incident/transmitted light dark/bright field

Magnification: 100x

*Table 9*

| Example | Downstream Speed [m/min] | Coating Chamber I | | | Coating chamber II | | | Multilayer film | | |
|---|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] | Total thickness [μm] |
| 22 | 0.71 | X | rolling bead | 380 | XII | 10 | 420 | 270 | 70 | 340 |

The optical qualities of the multilayer film of Example 22 were compared with the following flexible and conformable 2-layer films comprising a top polyurethane or polyethylene layer and a bottom pressure-sensitive adhesive layer. The comparative films are commercially available as follows:

- PUL 2006 3M™ High Performance Protective polyurethane film, commercially available from 3M
- PU 5892 GA7 3M™ High Performance Protective polyurethane film, commercially available from 3M
- P-450 3M™ High Performance Protective polyethylene film, commercially available from 3M

The optical quality of the films was determined using the Shack-Hartmann wavefront sensor system and the Siemens Star based test method as described above. The good optical quality and low image distortion of the flexible film of Example 22 could be seen from the results listed in Table 10. The peak-to-valey values of the wavefront deformation summarize the deformation of the wavefront induced by the protective films and the deformation induced by the glas where the film is laminated on. The reference measurement of the glass without protective film shows that the influence of the glass plate on the deformation of the wavefront is very small compared to the influence of the protective film. The peak-to-valey value of the wavefront deformation measured for the float glass plate is substracted from the peak-to-valey value of the wavefront deformation measured for the multilayer film applied to the glass reference plate to provide the peak-to-valey value of the wavefront deformation for the multilayer film alone.

Figs. 9b - 9e show pictures of the Siemens Star test for the individual films. The Siemens star test for a glass reference is shown in Fig. 9a.

*Table 10*

| Film tested | Figure | Peak-to-valley wavefront [in λ = 635 nm] | Resolving power r [lp/mm] |
|---|---|---|---|
| Example 22 | 9b | 2.54*) | 1.28 |
| Comparative Ex. 1 | | | |
| | | | |
| (a) PUL 2006 | 9c | >10**) | 1.00 |
| (b) PU 5892 GA7 | 9d | > 43 **) | 0.43 |
| (c) P-450 | 9e | (evaluation not possible, due to very strong wavefront deformation) | 0.27 |
| | | | |
| (e) 2 mm thick clear float glass plate/ reference | 9a | 0.21 | 4.48 |
| *) peak-to-valey value of the wavefront deformation measured for the multilayer film of Example 22 aopplied to the float glass reference plate was 2.75<br>**) peak-to-peak value for glass alone not subtracted | | | |

*Example 23 and Comparative Example 2*

A coating apparatus comprising two coating chambers I and II as described above and schematically shown in Fig. 1 was used. Release liner Hostaphan 2SLK, 75 μm, Mitsubishi was used as a substrate, and the downstream speed was set as is indicated in Table 11 below. The front wall and the back wall were each formed by coating knives each having a bull nose profiled bottom portion and dimensions as is described above. The width of the coating chamber in downstream direction and the gap between the bottom portion of the coating knife and the surface of the substrate are indicated in Table 11 below.

Liquid precursor X was metered in front of the upstream side of the front wall as rolling bead I and liquid precursor XIII was filled into coating chamber II. Subsequent to the formation of the stack of the two liquid precursor layers, a release liner Hostaphan 2SLK, 75 μm, Mitsubishi was applied onto the exposed surface of the top layer of liquid precursor XIII via the upstream wall of the back wall coating knife.

The stack of the two liquid precursor layers was cured by passing it along the UV-curing station described in the coating apparatus above to provide the multilayer film comprising a bottom exposed polyurethane layer and a top pressure-sensitive adhesive layer attached to the substrate formed by release liner Hostaphan 2SLK, 75 μm, Mitsubishi.

Subsequent to curing, the release liner applied to the bottom exposed urethane layer was removed and the

thickness of the cured polyurethane and pressure-sensitive adhesive layers, respectively, was evaluated by microscopy of cross-sections of the multilayer films. The cross-sections were obtained by cutting the samples with sharp razorblades and the measuring of the thickness listed in Table 11 was realized by using a light microscope (LM), Reichert Jung, Polyvar MET. Settings of equipment:

Polyvar MET: incident/transmitted light dark/bright field
Magnification: 100x

The T-peel strength and 90° peel adhesion to glass was evaluated according to the test method described above and the result is reported in Table 13 below.

*Comparative Example 2*

A 270 μm thick single non-sticky polyurethane layer and a 70 μm thick single pressure-sensitive adhesive layer were obtained by curing precursors X and XIII, respectively, each between two liners using the curing conditions as disclosed in the section "coating apparatus" above.

The thicknesses of the single layer adhesive films were as summarized in Table 12 below.

One release liner was removed from the single layer pressure-sensitive adhesive film and the non-sticky polyurethane film, respectively, and these were then laminated against each other.

The T-peel strength and 90° peel adhesion to glass was evaluated according to the test method described above and the result is reported in Table 13 below.

*Table 11*

| Example | Downstream Speed [m/min] | Coating Chamber I | | | Coating chamber II | | | Multilayer film | | |
|---|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] | Total thickness [μm] |
| 23 | 0,71 | X | rolling bead | 320-330 | XIII | 10 | 420 | 270 | 70 | 340 |

*Table 12*

| | Laminated protective film | Thickness of polyurethane layer [μm] | Thickness of pressure-sensitive adhesive layer [μm] | Total thickness [μm] |
|---|---|---|---|---|
| Comp. Ex. 2 | Laminated two-layer protective film (non-primed) | 270 | 70 | 340 |

*Table 13*

| Example | T-peel strength [N] | Failure mode observed wth T-peel measurements | 90° peel strength [N] |
|---|---|---|---|
| 23 | > 6.38 | Pop-off from substrate | 6.6 |
| Comp. Ex. 2 | 3.50 | Delamination failure at interface | 6.2 |

<u>List of reference numbers</u>

1 coating apparatus

2 substrate

3 downstream direction

10 precursor of multilayer film

11 front wall

12 back wall

13 intermediate wall

14 solid film

15 release film

16 coating chamber

17 rolling bead

18 bottom portion of coating knife

19a upstream surface of coating knife

19b downstream side of coating knife

20 cured multilayer film

100 gap

101 width of a coating chamber

200 wavefront sensor system

201 fiber coupled layer diode

202 spherical wavefront

203 aspheric collimation lens

204 plane wavefront

205 glass plate

206 deformed wavefront

207 Kepler telescope

210 Shack-Hartmann sensor device

**Claims**

1. Continuous process of forming a multilayer film comprising at least two superimposed polymer layers comprising the steps of:

   (i) providing a substrate;
   (ii) providing two or more coating knives which are offset, independently from each other, from said substrate to form a gap normal to the surface of the substrate;
   (iii) moving the substrate relative to the coating knives in a downstream direction,
   (iv) providing curable liquid precursors of the polymers to the upstream side of the coating knives thereby coating the two or more precursors through the respective gaps as superimposed layers onto the substrate;
   (v) optionally providing one or more solid films and applying these along the upstream side of the coating knives, and
   (vi) curing the precursor of the multilayer film thus obtained;
   wherein a lower layer of a curable liquid precursor is covered by an adjacent upper layer of a curable liquid precursor or a film, respectively, essentially without exposing said lower layer of a curable liquid precursor.

2. Process according to claim 1 wherein the coating knife has an upstream surface, a downstream surface and a bottom portion facing the substrate in the distance of the gap.

3. Process according to any of claims 1 - 2 wherein the coating knives are formed from materials selected from a group of materials comprising metals, polymeric materials and glass.

4. Process according to any of claims 2 - 3 wherein the cross-sectional profile the coating knife exhibits at its transversely extending edge facing the web, is essentially planar, curved, concave or convex.

5. Process according to any of claims 1 - 4 wherein the liquid precursors are applied under ambient pressure or an over-pressure of less than 0.5 bar.

6. Process according to any of claims 1 - 5 wherein the liquid precursors of the polymer material are provided in one or more coating chambers essentially abutting each other and being bordered in downstream direction by a front wall, optionally one or more intermediate walls and a back wall, and, optionally, by a rolling bead positioned up-web relative to the front wall.

7. Process according to claim 6 wherein the upstream intermediate walls, the back wall and, if a rolling bead is present upstream relative to the front wall, the front wall are formed by coating knives.

8. Process according to any of claims 1 - 7 wherein the solid films are attached to form the lowest layer, the topmost layer or an intermediate layer of the precursor of the multilayer film.

9. Process according to any of the preceding claims wherein the substrate and/or the solid film are selected from a

group of materials comprising polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres.

**10.** Process according to claim 9 wherein at least the exposed surface of the substrate and/or at least one surface of a solid film facing the precursor of the multilayer film, is a release surface.

**11.** Process of any of claims 1 - 10 wherein the substrate forms an integral part of the multilayer film subsequent to the curing step.

**12.** Process according to any of the preceding claims wherein the speed of substrate in MD with respect to the coating apparatus is between 0.05 and 100 m/min.

**13.** Process according to any of the preceding claims wherein the precursor layers are cured thermally and/or by exposing them to actinic radiation after they have passed the back wall of the coating apparatus.

**14.** Process according to any of the proceeding claims wherein at least one of the precursors comprises at least one compound having a radiation curable ethylene group.

**15.** Process according to any of the preceding claims wherein the liquid precursors have a Brookfield viscosity of at least 1,000 mPas at 25 °C.

**16.** Multilayer film comprising at least two superimposed polymer layers wherein the top layer comprises a polyurethane polymer obtainable from the polymerization of a liquid precursor comprising at least one ethylenically unsaturated urethane compound and wherein the bottom layer comprises a (meth)acrylate based pressure-sensitive adhesive, the multilayer film having a maximum wave-front aberration of a wavefront resulting from a planar wavefront of a wavelength of $\lambda$ = 635 nm impinging normally on the top layer and transmitted through the multilayer film, measured as the peak-to-valley value of the transmitted wavefront, of less than 6 $\lambda$ (= 3,810 nm).

**17.** Multilayer film according to claim 15 wherein the ethylenically unsaturated polyurethane compound is a (meth) acrylate urethane compound.

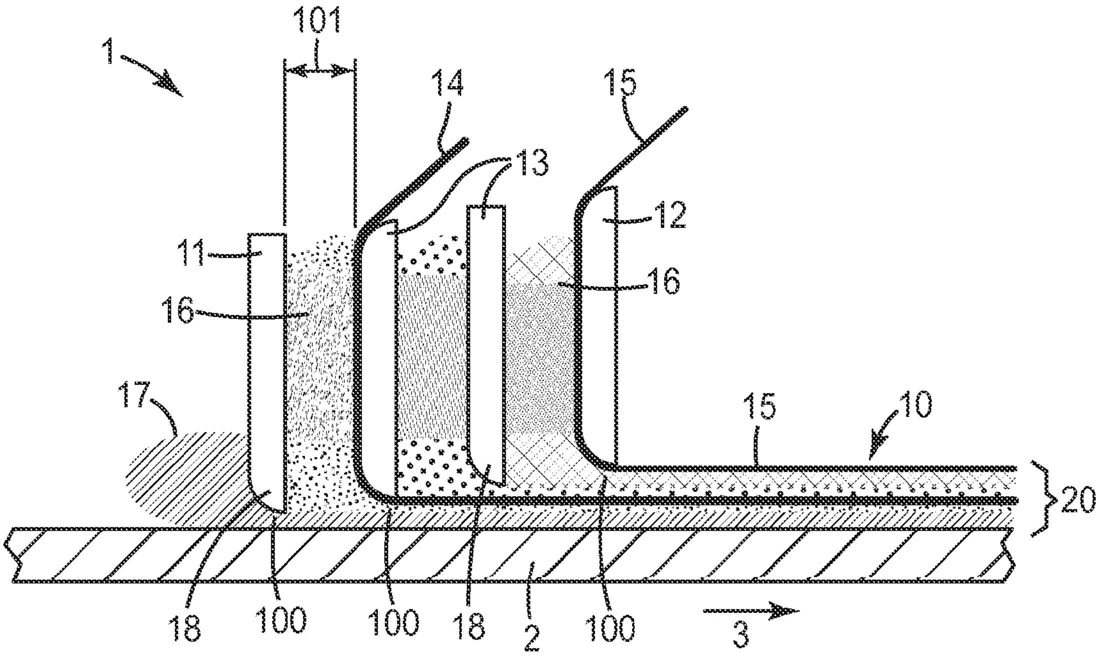


FIG. 1

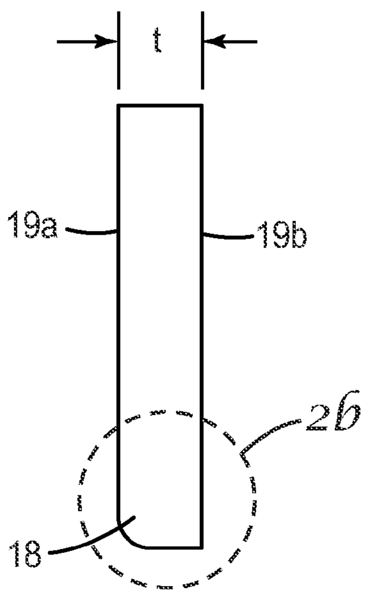


FIG. 2a

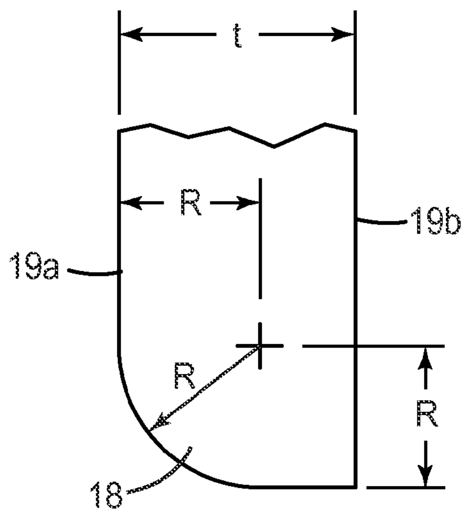


FIG. 2b

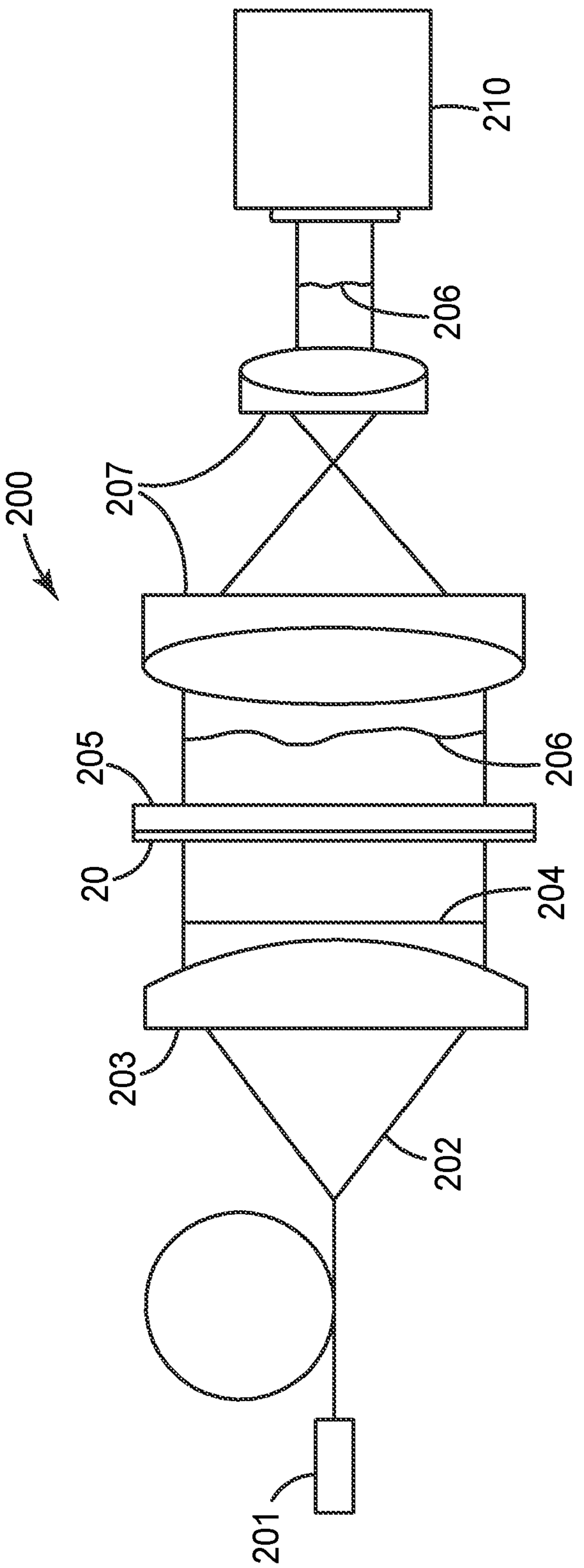


FIG. 3

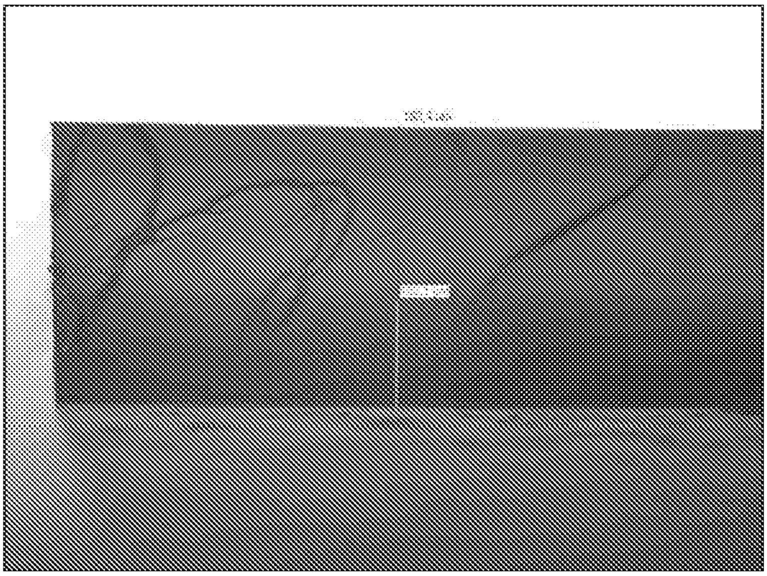

FIG. 4

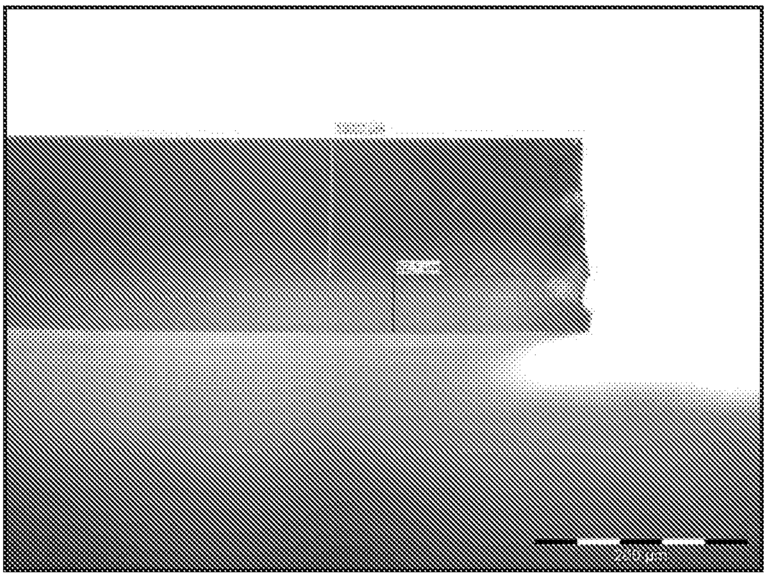

FIG. 5

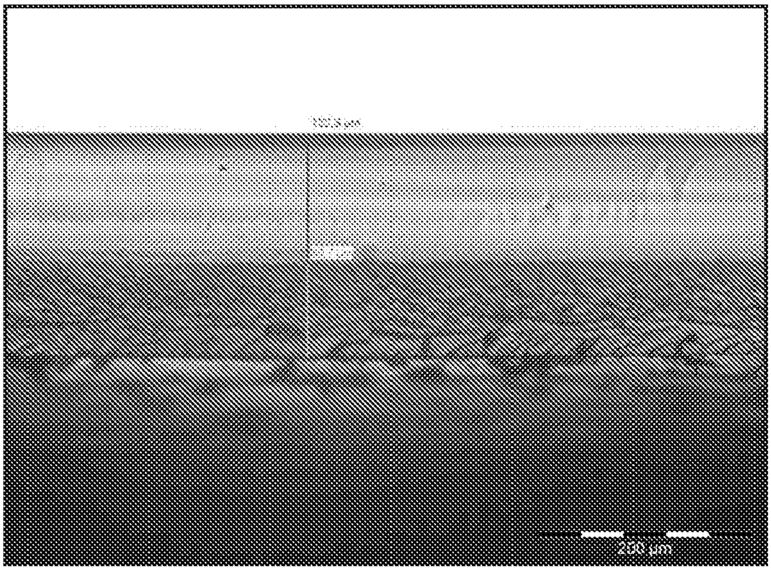


FIG. 6

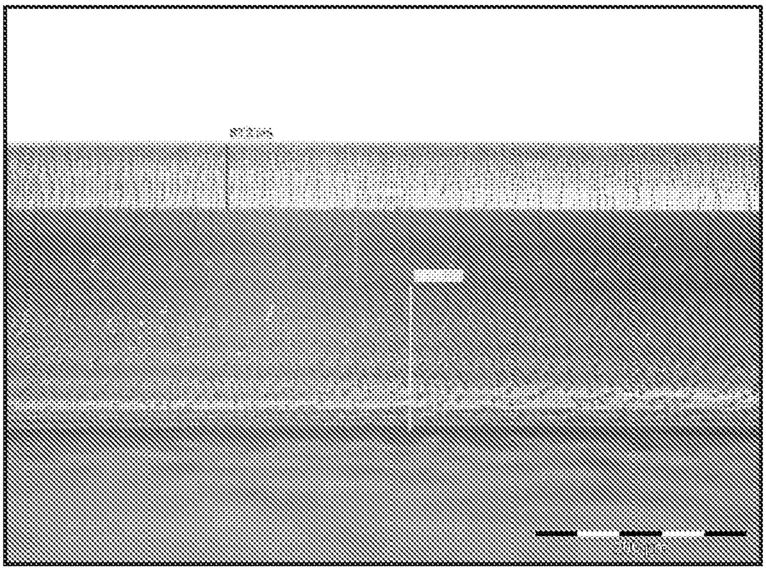

FIG. 7a

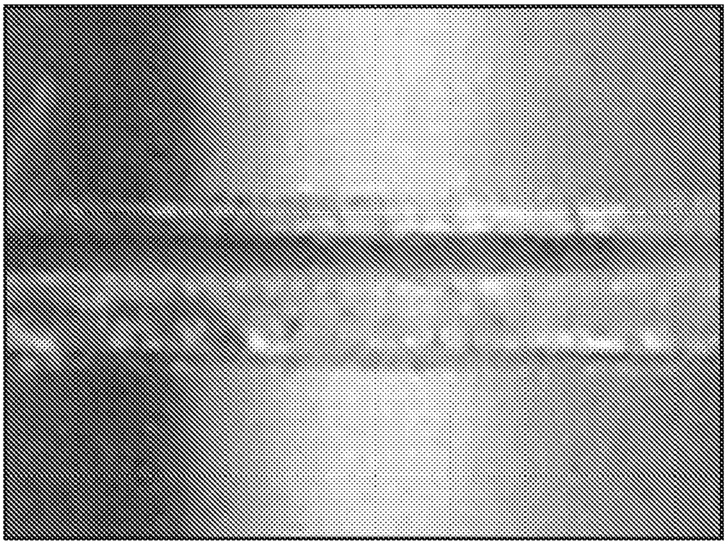

FIG. 7b

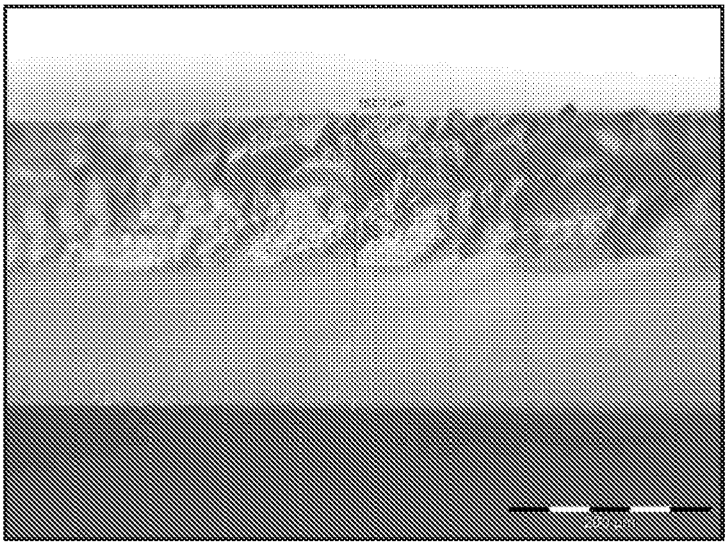

FIG. 8

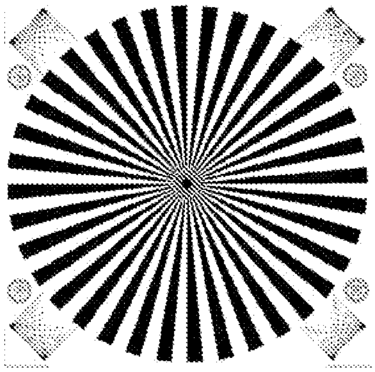

FIG. 9a

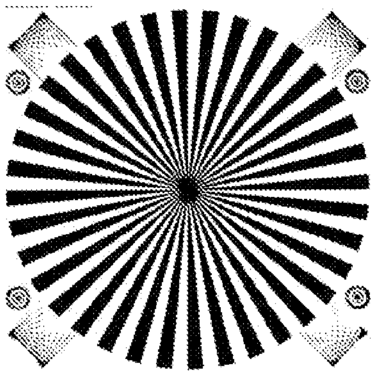

FIG. 9b

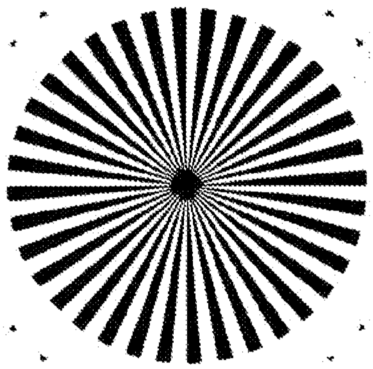

FIG. 9c

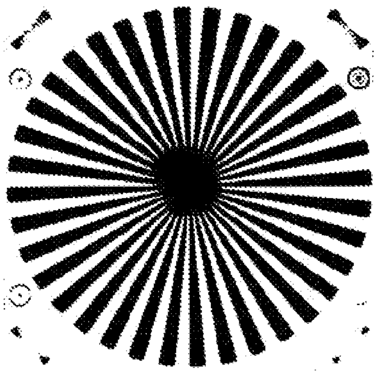

FIG. 9d

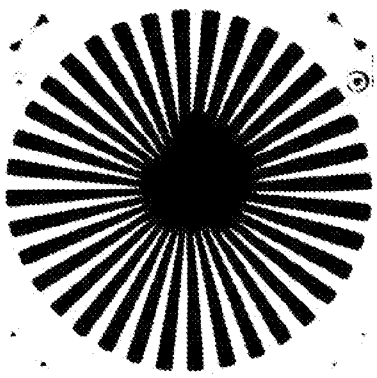

FIG. 9e

Europäisches Patentamt
European Patent Office
Office européen des brevets

# EUROPEAN SEARCH REPORT

Application Number
EP 10 15 2185

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 4 143 190 A (CHOINSKI EDWARD J) 6 March 1979 (1979-03-06)<br>* abstract *<br>* column 1, line 11 - line 47 *<br>* column 2, line 31 - column 3, line 2 *<br>* claims 1-4 *<br>----- | 1,2,4,6, 8,9,11, 13 | INV.<br>B05D1/30<br>B05D7/00<br>C09J7/02<br><br>ADD.<br>B05D1/42 |
| X | DE 101 30 680 A1 (FUJI PHOTO FILM CO LTD [JP]) 3 January 2002 (2002-01-03)<br>* abstract *<br>* paragraphs [0001], [0002] *<br>* claims 1,2,3,9 *<br>* figures 3,5 *<br>----- | 1,3,5,7, 10,12,14 | |
| X | EP 0 974 632 A1 (BEIERSDORF AG [DE]) 26 January 2000 (2000-01-26)<br>* paragraphs [0004], [0007] *<br>* claims 1-4,6,8 *<br>----- | 16,17 | |
| X<br>A | US 2004/022954 A1 (TSUDA TAKEAKI [JP] ET AL) 5 February 2004 (2004-02-05)<br>* abstract *<br>* paragraphs [0001], [0003], [0005], [0012] - [0018] *<br>* claim 1 *<br>----- | 1,2,8<br>16 | TECHNICAL FIELDS SEARCHED (IPC)<br>B05D<br>C09J |
| X,D | US 5 962 075 A (SARTOR LUIGI [US] ET AL) 5 October 1999 (1999-10-05)<br>* abstract *<br>* column 1, line 13 - line 31 *<br>* column 3, line 59 - column 5, line 66 *<br>* column 8, lines 56-67 *<br>* claims 1-3 *<br>-----<br>-/-- | 1,15 | |

The present search report has been drawn up for all claims

| Place of search | Date of completion of the search | Examiner |
|---|---|---|
| The Hague | 15 June 2010 | Riederer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 10 15 2185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 538 262 A1 (VOITH PAPER PATENT GMBH [DE] VOITH PATENT GMBH [DE]) 8 June 2005 (2005-06-08) * abstract * * claims 1,12-16,27,60 * * claims 1,2 * ----- | 1 | |
| A,D | US 4 894 259 A (KULLER DOUGLAS H [US]) 16 January 1990 (1990-01-16) * the whole document * ----- | 1 | |
| | | | TECHNICAL FIELDS SEARCHED (IPC) |

The present search report has been drawn up for all claims

2

| Place of search | Date of completion of the search | Examiner |
|---|---|---|
| The Hague | 15 June 2010 | Riederer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 2185

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2010

| Patent document cited in search report | Publication date | Patent family member(s) | Publication date |
|---|---|---|---|
| US 4143190 A | 06-03-1979 | NONE | |
| DE 10130680 A1 | 03-01-2002 | US 2002015796 A1 | 07-02-2002 |
| EP 0974632 A1 | 26-01-2000 | DE 19833175 A1 | 13-04-2000 |
| | | JP 2000044898 A | 15-02-2000 |
| US 2004022954 A1 | 05-02-2004 | CN 1484554 A | 24-03-2004 |
| | | WO 03020444 A1 | 13-03-2003 |
| | | JP 2003062517 A | 04-03-2003 |
| | | TW 572794 B | 21-01-2004 |
| US 5962075 A | 05-10-1999 | US 5728430 A | 17-03-1998 |
| EP 1538262 A1 | 08-06-2005 | AT 429541 T | 15-05-2009 |
| | | JP 2005161153 A | 23-06-2005 |
| US 4894259 A | 16-01-1990 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4818610 A, Zimmerman
- JP 2001187362 A, Takashi
- JP 2003001648 A, Takashi
- US 4894259 A, Kuller
- EP 0808220 A, Leonard
- US 5962075 A, Sartor
- US 5728430 A, Sartor
- WO 0189673 A, Hools
- US 5612092 A
- WO 2004000961 A
- WO 9216593 A
- WO 2007124263 A
- US 5506279 A


### Non-patent literature cited in the description


- **KIRK-OTHMER et al.** Encyclopedia of Chemical Technology. 1993, vol. 6, 610
- Solvents. Paint Testing Manual. American Society for Testing and Materials
- A Three-Dimensional Approach to Solubility. *Journal of Paint Technology,* vol. 38 (496), 269-280